(19) Europäisches Patentamt

European Patent Office

Office européen des brevets

(11) **EP 4 541 583 A1**

(12) **EUROPEAN PATENT APPLICATION**

(43) Date of publication:
**23.04.2025 Bulletin 2025/17**

(21) Application number: **23204439.6**

(22) Date of filing: **18.10.2023**

(51) International Patent Classification (IPC):
**B32B 27/08** (2006.01)   **B32B 27/16** (2006.01)
**B32B 27/18** (2006.01)   **B32B 27/32** (2006.01)
**C08J 5/18** (2006.01)   **C08L 23/06** (2006.01)

(52) Cooperative Patent Classification (CPC):
**B32B 27/32; B32B 27/16; B32B 27/18; C08J 5/18;
C08L 23/06;** B32B 27/08; B32B 2250/03;
B32B 2250/24; B32B 2250/246; B32B 2255/10;
B32B 2255/205; B32B 2264/10; B32B 2270/00;
B32B 2307/30; B32B 2307/308;          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Abu Dhabi Polymers Co. Ltd (Borouge) - Sole
Proprietorship L.L.C.
Abu Dhabi (AE)**
• **Borealis AG
1020 Vienna (AT)**

(72) Inventors:
• CASCONE, Sara
Abu Dhabi (AE)
• ANTONY, Nisha
Abu Dhabi (AE)
• LIM, Chee Siong
049145 Singapore (SG)
• CHIEN, Chan Chuan
049145 Singapore (SG)
• YUSOF, Rosazlinda
Abu Dhabi (AE)

(74) Representative: **Maiwald GmbH**
**Elisenhof**
**Elisenstraße 3**
**80335 München (DE)**

(54) **MULTILAYER FILM**

(57)      The present invention relates to a multilayer film comprising at least three layers (A), (B) and (C), wherein core layer (B) comprises a polyethylene composition (PE-B) comprising a high density polyethylene and synthetic hydrotalcite, a metallized multilayer film, a process for producing said multilayer film and the use of said polyethylene composition (PE-B) in the core layer (B) for producing a multilayer film comprising at least three layers (A), (B) and (C).

**EP 4 541 583 A1**

(52) Cooperative Patent Classification (CPC): (Cont.)
B32B 2307/31; B32B 2307/50; B32B 2307/54;
B32B 2307/72; B32B 2307/7244; B32B 2307/7246;
B32B 2307/736; B32B 2307/7376; B32B 2307/746;
B32B 2439/06

## Description

The present invention relates to a multilayer film comprising at least three layers (A), (B) and (C), wherein core layer (B) comprises a polyethylene composition (PE-B) comprising a high density polyethylene and synthetic hydrotalcite, a metallized multilayer film process for producing said multilayer film and the use of said polyethylene composition (PE-B) in the core layer (B) for producing a multilayer film comprising at least three layers (A), (B) and (C).

## Technical background

Metallized films require good adhesion of the metal layer on the polyolefin surface. The adhesion of the metal layer can be ensured by different surface treatments of the film during the production, i.e. non-polar surface can be prepared to chemically and molecularly bond to the deposited aluminium layer by oxidizing the surface by the Corona treatment. However, the dyne level of this treatment reduces during the time, due to several factors: time, humidity, additive migration and contaminations.

Moreover, another key aspect in packaging is to guarantee a superior barrier performance and thus a multilayer structure in which different polymers can be coextruded with different layer(s) are commonly used for various packaging. The enhanced barrier properties would enable to increase shelf life of packed goods and drives to use of HDPE for its lower water vapour transmission rate (WVTR) and oxygen transmission rate (OTR) in the packaging structures.

In the present invention it has surprisingly been found that by carefully selecting the additives of the polyethylene composition PE-B of core layer B a superior Corona treatment retention during the time is obtained which ensures excellent metal adhesion and stability.

## Summary of the invention

In a first aspect the present invention relates to a multilayer film comprising at least three layers (A), (B) and (C), wherein

- layer (B) is the core layer of the multilayer film and comprises from 90 to 100 wt.-%, preferably from 95 to 100 wt.-%, more preferably 100 wt.-%, based on the total weight of layer (B), of a polyethylene composition (PE-B) comprising from 95.00 to 99.995 wt.-%, preferably from 97.50 to 99.99 wt.-%, more preferably from 99.0 to 99.99 wt.-% of a high density polyethylene, based on the total weight of the polyethylene composition (PE-B); and

     from 50 to 1000 ppm, preferably from 75 to 700 ppm, more preferably from 100 to 500 ppm synthetic hydrotalcite, based on the total weight of the polyethylene composition (PE-B),
     wherein the polyethylene composition (PE-B) has a density of from 955.0 to 968.0 kg/m$^3$, preferably from 956.0 to 965.0 kg/m$^3$, more preferably from 957.0 to 963.0 kg/m$^3$, determined according to ISO 1183-1:2004 Method A.;

- layer (A) is the outer layer of the multilayer film that is surface-treated on its outer surface and comprises from 60 to 100 wt.-%, preferably from 70 to 100 wt.-%, more preferably 80 to 100 wt.-%, based on the total weight of layer (A), of a polyethylene composition (PE-A); and
- layer (C) is the outer sealing layer of the multilayer film and comprises from 60 to 100 wt.-%, preferably from 70 to 100 wt.-%, more preferably 80 to 100 wt.-%, based on the total weight of layer (C), of a polyethylene composition (PE-C);

wherein
surface-treated layer (A) shows a surface treatment retainment (STR at time t) after t = 28 days of at least 92.0%, with STR at time t being calculated according to the following formula:

$$STR\ at\ time\ t = 100\% - \frac{(surface\ energy\ at\ time\ 0 - surface\ energy\ at\ time\ t)}{surface\ energy\ at\ time\ 0} \cdot 100\%.$$

In a further aspect, the present invention relates to a metallized multilayer film, wherein the multilayer film as described above or below has been metallized on the outer surface of layer (A) after the outer surface of layer (A) has been surface treated, wherein the metallized multilayer film has an oxygen transmission rate (OTR) of not more than 125 cc/m$^2$·d, preferably not more than 100 cc/m$^2$·d, when determined under constant conditions of 23°C and 0% RH, and a water vapour transmission rate of not more than 0.60 g/m$^2$·d, preferably not more than 0.55 g/m$^2$·d, more preferably not more than 0.50 g/m$^2$·d, when determined under constant conditions of 38°C and 90% RH.

In another aspect the present invention relates to a process for producing the multilayer film as described above or below comprising the steps of:

- Providing the polyethylene compositions (PE-A), (PE-B) and (PE-C);
- Extruding, preferably coextruding the polyethylene compositions (PE-A), (PE-B) and (PE-C) to produce layers (A), (B) and (C) of the multilayer film;
- Surface treating the outer surface of layer (A).

In a further process step the surface-treated outer surface of layer (A) can be metallized to obtain a metallized multilayer film.

In yet another aspect the present invention relates to the use of a polyethylene composition (PE-B) comprising

- from 95.00 to 99.995 wt.-%, preferably from 97.50 to 99.99 wt.-%, more preferably from 99.0 to 99.99 wt.-% of a high density polyethylene, based on the total weight of the polyethylene composition (PE-B); and
- from 50 to 1000 ppm, preferably from 75 to 700 ppm, more preferably from 100 to 500 ppm synthetic hydrotalcite, based on the total weight of the polyethylene composition (PE-B)

in a core layer (B) in an amount of from 90 to 100 wt.-%, preferably from 95 to 100 wt.-%, more preferably 100 wt.-%, based on the total weight of layer (B) for producing a multilayer film having an outer layer (A) that is surface-treated, the core layer (B) and an outer sealing layer (C),
wherein
the surface-treated layer (A) shows a surface treatment retainment (STR at time t) after t =28 days of at least 92.0%, with STR at time t being calculated according to the following formula:

$$STR\ at\ time\ t = 100\% - \frac{(surface\ energy\ at\ time\ 0 - surface\ energy\ at\ time\ t)}{surface\ energy\ at\ time\ 0} \cdot 100\%.$$

The multilayer films according to the present invention show excellent metal adhesion and stability of the inventive resin and film structure was achieved by ensuring a superior Corona treatment retention during the time. This was obtained by modifying the recipe in order to avoid any additive blooming effect that would affect the surface properties.

A high density polyethylene resin was designed in order to contain low-migratable additives with well dispersed inorganic particles in order to achieve a superior metal adhesion with high barrier properties.

The invention has proven to have better barrier properties than the comparative examples, both in the natural and metallized form, as can be seen from the examples below.

Due to these properties, the inventive resin is suitable for different applications, such as lamination, lamitube and metallization. Films and film structures can particularly benefit from this invention, and can be made using conventional blown film fabrication techniques or other, preferably monoaxial orientation process. The films may be monolayer or multilayer films, can also be coextruded with the other layer(s), or the film can be laminated onto another layer(s) into secondary stages. In the multilayer films, the inventive resin can be used (mainly) in the core layer, and may also be used in other layers. The inventive example is most suitable for blown films to produce different packaging applications in lamitubes, heavy duty shipping sacks, lamination films, collation shrinks films and metallized films.

**Brief description of the Figure**

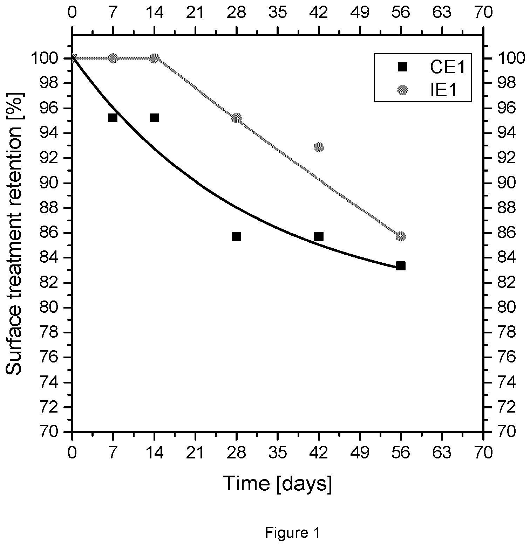

Figure 1 shows the Corona treatment decay curves at ambient conditions of the non metallized films of three-layer films IEF1 (identified as IE1 in figure) and CEF1 (identified as CE1 in figure) as surface treatment retention over time. During the production, both the films were Corona treated at 42 dyne/cm, and the production date was taken as day 0.

**Detailed description of the invention**

Multilayer film

In a first aspect the present invention relates to a multilayer film comprising at least three layers (A), (B) and (C), wherein

- layer (B) is the core layer of the multilayer film and comprises from 90 to 100 wt.-%, preferably from 95 to 100 wt.-%, more preferably 100 wt.-%, based on the total weight of layer (B), of a polyethylene composition (PE-B) comprising from 95.00 to 99.995 wt.-%, preferably from 97.50 to 99.99 wt.-%, more preferably from 99.0 to 99.99 wt.-% of a high density polyethylene, based on the total weight of the polyethylene composition (PE-B); and

from 50 to 1000 ppm, preferably from 75 to 700 ppm, more preferably from 100 to 500 ppm synthetic hydrotalcite, based on the total weight of the polyethylene composition (PE-B), wherein the polyethylene composition (PE-B) has a density of from 955.0 to 968.0 kg/m³, preferably from 956.0 to 965.0 kg/m³, more preferably from 957.0 to 963.0 kg/m³;

- layer (A) is the outer layer of the multilayer film that is surface-treated on its outer surface and comprises from 60 to 100 wt.-%, preferably from 70 to 100 wt.-%, more preferably 80 to 100 wt.-%, based on the total weight of layer (A), of a polyethylene composition (PE-A); and
- layer (C) is the inner sealing layer of the multilayer film and comprises from 60 to 100 wt.-%, preferably from 70 to 100 wt.-%, more preferably 80 to 100 wt.-%, based on the total weight of layer (C), of a polyethylene composition (PE-C);

wherein

layer (A) before metallization shows a surface treatment retainment (STR at time t) after t = 28 days of at least 92.0%, with STR at time t being calculated according to the following formula:

$$STR \ at \ time \ t = 100\% - \frac{(surface \ energy \ at \ time \ 0 - surface \ energy \ at \ time \ t)}{surface \ energy \ at \ time \ 0} \cdot 100\%.$$

The multilayer film comprises at least three layers (A), (B) and (C).

Layer (B) is thereby the core layer. This means that both surfaces of layer (B) are in adherent contact with the surface of another layer of the multilayer film.

Layer (A) is the outer layer of the multilayer film. This means that one surface of the layer (A) is in adherent contact with the surface of another layer of the multilayer film, whereas the other surface of layer (A) is the outer surface of the multilayer film.

The outer surface of the multilayer film, i.e. the outer surface of layer (A) is metallized. Before metallization the outer surface of the multilayer film, i.e. the outer surface of layer (A) is preferably surface treated, more preferably Corona-treated.

Layer (C) is the inner layer of the multilayer film. This means that one surface of the layer (C) is in adherent contact with the surface of another layer of the multilayer film, whereas the other surface of layer (C) is the inner surface of the multilayer film.

The inner surface of the multilayer film, i.e. the inner surface of layer (C) can be sealed to another surface, like the surface of an article or film.

The multilayer film comprises preferably consists of three to nine, layers, more preferably three to seven layers, still more preferably three to five layers.

The total thickness of the multilayer film is preferably in the range of from 15 to 75 μm, preferably from 20 to 65 μm, more preferably from 25 to 55 μm.

In one preferred embodiment, the multilayer film is a three-layer film in the configuration (A)-(B)-(C) with one surface of layer (A) being in adherent contact with one surface of core layer (B) and one surface of layer (C) being in adherent contact with the other surface of core layer (B).

In said embodiment layer (A) preferably has a thickness of from 2.5 to 20.0 μm, more preferably from 5.0 to 17.5 μm, still more preferably from 7.5 to 15.0 μm, such as about 10.0 μm.

Further in said embodiment layer (B) preferably has a thickness of from 5.0 to 35.0 μm, more preferably from 7.5 to 30.0 μm, still more preferably from 10 to 25.0 μm, such as about 20.0 μm.

Still further in said embodiment layer (C) preferably has a thickness of from 2.5 to 20.0 μm, more preferably from 5.0 to 17.5 μm, still more preferably from 7.5 to 15.0 μm, such as about 10.0 μm.

In another preferred embodiment the multilayer film is a multilayer layer film with at least five layers, more preferably a five-layer film in the configuration (A)-(X)-(B)-(Y)-(C), with one or more layer(s) (X), such as from one to three layer(s) (X), preferably one layer (X) being sandwiched between layers (A) and (B) and one or more layer(s) (Y), such as from one to three layer(s) (Y), preferably one layer (Y), being sandwiched between layers (C) and (B).

In said embodiment layer (A) preferably has a thickness of from 2.0 to 12.5 μm, more preferably from 3.0 to 10.0 μm, still more preferably from 4.0 to 8.0 μm.

Further in said embodiment layer (B) preferably has a thickness of from 5.0 to 30.0 μm, more preferably from 7.5 to 25.0 μm, still more preferably from 10.0 to 20.0 μm.

Still further in said embodiment layer (C) preferably has a thickness of from 2.0 to 12.5 μm, more preferably from 3.0 to 10.0 μm, still more preferably from 4.0 to 8.0 μm.

Additional layer(s) (X) preferably independently have a thickness of from 2.0 to 15.0 μm, more preferably from 3.0

to 12.5 μm, still more preferably from 4.0 to 10.0 μm.

Additional layer(s) (Y) preferably independently have a thickness of from 2.0 to 12.5 μm, more preferably from 3.0 to 10.0 μm, still more preferably from 4.0 to 8.0 μm.

The outer surface of the multilayer film, i.e. the outer surface of layer (A) is surface treated, more preferably Corona-treated.

Surface-treated layer (A) shows a surface treatment retainment (STR at time t) after t= 28 days of at least 92.0%, such as from 92.0 to 100%, preferably from 94.0% to 99.5%.

Further, surface-treated layer (A) preferably shows a surface treatment retainment (STR at time t) after t = 42 days of at least 88.0% such as from 88.0% to 100%, more preferably from 90.0% to 98.0%,

Still further, surface-treated layer (A) preferably shows a surface treatment retainment (STR at time t) after t = 56 days of at least 85.0%, such as from 85.0% to 95.0%, more preferably from 85.5% to 92.5%, still more preferably from 86.0 to 90.0 %.

Thereby, STR at time t is calculated according to the following formula:

$$STR \ at \ time \ t = 100\% - \frac{(surface \ energy \ at \ time \ 0 - surface \ energy \ at \ time \ t)}{surface \ energy \ at \ time \ 0} \cdot 100\%,$$

with

time 0 being the time of surface treatment and
time t being the time of interest (e.g. t = 28 days after surface treatment, t = 42 days after surface treatment or t = 56 days after surface treatment).

The multilayer film preferably has a ratio of tensile stress in machine direction to tensile stress in transverse direction (tensile stress ratio MD/TD) of from 0.80 to 1.20, more preferably from 0.83 to 1.17, still more preferably from 0.85 to 1.15, determined according to ISO 527-2.

The multilayer film is especially suitable for being metallized on the surface treated outer surface of layer (A).

Metallized multilayer film

In a second aspect the present invention relates to a metallized multilayer film, wherein the multilayer film as described above or below has been metallized on the outer surface of layer (A) after the outer surface of layer (A) has been surface treated.

The metallized multilayer film has an oxygen transmission rate (OTR) of not more than 125 cc/m$^2$·d, such as from 5 to 125 cc/m$^2$·d, preferably from 10 to 100 cc/m$^2$·d, when determined under constant conditions of 23°C and 0% RH

Further the metallized multilayer film has a water vapour transmission rate of not more than 0.60 g/m$^2$·d, such as from 0.01 to 0.60 g/m$^2$·d, preferably from 0.02 to 0.55 g/m$^2$·d, more preferably from 0.05 to 0.50 g/m$^2$·d, when determined under constant conditions of 38°C and 90% RH.

The oxygen transmission rate (OTR) and the water vapour transmission rate are preferably measured on metallized multilayer films having a thickness of 40 μm.

Further, the metallized multilayer film preferably has an average surface roughness (Sa) in the range of from 20 to 100 nm, more preferably from 22 to 95 nm, still more preferably from 25 to 90 nm, when measured on the metallized outer surface of layer (A).

Still further, the metallized multilayer film preferably has a coefficient of friction (CoF) in the range of from 0.20 to 0.60, more preferably from 0.22 to 0.58, still more preferably from 0.25 to 0.55, when measured on the metallized outer surface of layer (A).

Furthermore, the metallized multilayer film preferably has an optical density of from 2.00 to 2.75, preferably from 2.05 to 2.60.

The metallized multilayer film of the present invention is especially suitable for packaging applications in lamitubes, heavy duty shipping sacks, lamination films, collation shrinks films and metallized films.

Layer (B)

Layer (B) comprises from 90 to 100 wt.-%, preferably from 95 to 100 wt.-%, more preferably 100 wt.-%, based on the total weight of layer (B), a polyethylene composition (PE-B).

In one preferred embodiment layer (B) consists of polyethylene composition (PE-B).

Polyethylene composition (PE-B) comprises

from 95.00 to 99.995 wt.-%, preferably from 97.50 to 99.99 wt.-%, more preferably from 99.0 to 99.99 wt.-% of a high density polyethylene, based on the total weight of the polyethylene composition (PE-B); and

from 50 to 1000 ppm, preferably from 75 to 700 ppm, more preferably from 100 to 500 ppm synthetic hydrotalcite, based on the total weight of the polyethylene composition (PE-B).

Polyethylene composition (PE-B) can further comprise up to 5.0 wt.-%, such as from 0 to 5.0 wt.-%, preferably from 0 to 2.5 wt.-%, still more preferably from 0 to 1.0 wt.-%, based on the total weight of the polyethylene composition (PE-B), of other components, such as additives and/or admixtures different from synthetic hydrotalcite or polymers different from high density polyethylene.

Additives are preferably selected from the group consisting of slip agents, UV-stabiliser, antioxidants, nucleating agents and mixtures thereof, preferably these additives are contained in an the range from 0 to 5000 ppm, preferably in the range from 10 to 5000 ppm and more preferably in the range from 500 to 3000 ppm based on the overall weight of the layer (B).

Admixtures are preferably selected from the group consisting of pigments, fillers and mixtures thereof, preferably these additives are contained in an the range from 0 to 5 wt.-%, preferably in the range from 0 to 3 wt.-%, more preferably in the range from 0 to 2 wt.-% and most preferably from 0 to 1 wt.-% based on the overall weight of the layer (B). Synthetic hydrotalcite usually acts as acid scavenger and anti blocking agent in film applications so that the additives typically do not include additional acid scavenger or antiblocking agent such as metal stearates.

The additives and/or admixtures can be added to the polyethylene composition (PE-B) in pure form or in form of one or more masterbatch(es). In a masterbatch part or all of the additives and admixtures are pre-mixed in a carrier polymer in concentrated amount. The amount of the carrier polymer of the masterbatch is calculated to the amount of the additives and admixtures, not to the amount of additional polymeric components.

In a preferred embodiment the polyethylene composition (PE-B) does not contain any polymers different from the high density polyethylene.

In said embodiment, the high density polyethylene, the synthetic hydrotacite and the optional additives and admixtures add up to 100 wt.-% of the total weight of the polyethylene composition (PE-B).

The polyethylene composition (PE-B) has a density of from 955.0 to 968.0 kg/m$^3$, preferably from 956.0 to 965.0 kg/m$^3$, more preferably from 957.0 to 963.0 kg/m$^3$, determined according to ISO 1183-1:2004 Method A.

It is preferred that the polyethylene composition (PE-B) has one or more or all of the following properties:

- a melt flow rate $MFR_2$ in the range of from 0.1 to 1.5 g/10 min, preferably from 0.2 to 1.2 g/10 min, more preferably from 0.5 to 1.0 g/10 min, determined according to ISO 1133 at 2.16 kg and 190°C;
- a melt flow rate $MFR_5$ in the range of from 0.5 to 5.0 g/10 min, preferably from 1.0 to 4.0 g/10 min, more preferably from 1.5 to 3.5 g/10 min, determined according to ISO 1133 at 5 kg and 190°C;
- a melt flow rate $MFR_{21}$ in the range of from 20 to 100 g/10 min, preferably from 25 to 90 g/10 min, more preferably from 30 to 70 g/10 min, determined according to ISO 1133 at 21.6 kg and 190°C;
- a flow rate ratio $FRR_{21/2}$, being the ratio $MFR_{21}/MFR_2$, in the range of from 30 to 80, preferably from 40 to 75, more preferably from 45 to 70;
- a flow rate ratio $FRR_{21/5}$, being the ratio $MFR_{21}/MFR_5$, in the range of from 5 to 35, preferably from 10 to 30, more preferably from 12 to 25;
- a flow rate ratio $FRR_{5/2}$, being the ratio $MFR_5/MFR_2$, in the range of from 1.5 to 5.0, preferably from 2.0 to 4.5, more preferably from 2.5 to 4.0;
- a crystallization temperature Tc in the range of from 113 to 125°C, preferably from 114 to 123°C, more preferably from 115 to 122°C, determined by DSC;
- a melting temperature Tm of from 125 to 140°C, preferably from 127 to 138 °C, more preferably from 128 to 136 °C, determined according to DSC;
- a zero shear viscosity $eta_0$ of from 15000 to 50000 Pa s, preferably from 17000 to 45000 Pa s, more preferably from 20000 to 40000 Pa s, determined according to ISO standards 6721-10;
- a weight average molecular weight Mw in the range of from 100000 to 175000 g/mol, preferably from 120000 to 165000 g/mol, more preferably from 135000 to 160000 g/mol, determined by GPC;
- a number average molecular weight Mn in the range of from 5000 to 15000 g/mol, preferably from 7500 to 12500 g/mol, more preferably from 8500 to 11000 g/mol, determined by GPC;
- a z average molecular weight Mz in the range of from 500000 to 1200000 g/mol, preferably from 550000 to 1000000 g/mol, more preferably from 600000 to 900000 g/mol, determined by GPC;
- a Mw/Mn ratio of from 10 to 20, preferably from 11 to 19, more preferably from 12 to 18;
- a xylene cold solubles (XCS) fraction of from 0.5 to 5.0 wt.-%, preferably from 0.7 to 4.0 wt.-%, more preferably from 1.0 to 3.5 wt.-%.

The high density polyethylene preferably has properties in the same range as the polyethylene composition (PE-B) as described above or below.

The properties of the polyethylene composition (PE-B) can also be measured from layer (B) of the metallized multilayer film.

It is preferred that layer (B) has properties in the same range as the polyethylene composition (PE-B) as described above or below.

The high density polyethylene preferably is a copolymer of ethylene with one or more comonomer(s), such as one or two comonomers selected from alpha-olefins having from 3 to 10 carbon atoms, preferably from 4 to 8 carbon atoms, more preferably from 1-butene and/or 1-hexene.

In one preferred embodiment the high density polyethylene is a copolymer of ethylene and 1-butene or a copolymer of ethylene and 1-hexene, preferably a copolymer of ethylene and 1-butene.

The high density polyethylene can be produced with conventional single site or Ziegler-Natta catalysis as is known in the art. Conventional cocatalysts, supports/carriers, electron donors etc. can be used.

A suitable and preferable catalyst is as follows.

The preferred polymerisation catalyst contains a magnesium compound, an aluminium compound and a titanium compound supported on a particulate support.

The particulate support can be an inorganic oxide support, such as silica, alumina, titania, silica-alumina and silica-titania. Preferably, the support is silica.

The average particle size of the silica support can be typically from 10 to 100 $\mu$m. However, it has turned out that special advantages can be obtained if the support has an average particle size from 15 to 30 $\mu$m, preferably from 18 to 25 $\mu$m. Especially it has been found out that the average particle size of the polymer produced in the process of the invention is the same irrespective whether the catalyst is prepared on a 20 $\mu$m support or on a 40 $\mu$m support. In fact, the fraction of fine polymer particles has been found to be lower if a support having an average particle size of 20 $\mu$m is used. The reduction of the fine polymer reduces the risk of plugging and thus contributes to a stable process operation. This, on the other hand, helps to produce polymer films with a good homogeneity. Examples of suitable support materials are, for instance, ES747JR produced and marketed by Ineos Silicas (former Crossfield), and SP9-491, produced and marketed by Grace.

The magnesium compound is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is chlorine containing aluminium alkyl. Especially preferred compounds are aluminium alkyl dichlorides and aluminium alkyl sesquichlorides.

The titanium compound is a halogen containing titanium compound, preferably chlorine containing titanium compound. Especially preferred titanium compound is titanium tetrachloride.

The catalyst can be prepared by sequentially contacting the carrier with the above mentioned compounds, as described in EP-A-688794. Alternatively, it can be prepared by first preparing a solution from the components and then contacting the solution with a carrier, as described in WO-A-01/55230.

Further suitable catalysts are described in EP 2 799 456.

The above mentioned solid catalyst component is contacted with an aluminium alkyl cocatalyst, which preferably is an aluminium trialkyl compound, after which it can be used in polymerisation. The contacting of the solid catalyst component and the aluminium alkyl cocatalyst can either be conducted prior to introducing the catalyst into the polymerisation reactor, or it can be conducted by introducing the two components separately into the polymerisation reactor.

The high density polyethylene may be produced in any suitable polymerization process known in the art, which comprise at least one polymerization stage, where polymerization is typically carried out in solution, slurry, bulk or gas phase. Preferably the high density polyethylene is produced in a multistage polymerization process comprising at least two polymerization zones.

A first ethylene polymer component is preferably produced in a first polymerization zone and a second ethylene polymer component is preferably produced in a second polymerization zone. The first polymerization zone and the second polymerization zone may be connected in any order, i.e. the first polymerization zone may precede the second polymerization zone, or the second polymerization zone may precede the first polymerization zone or, alternatively, polymerization zones may be connected in parallel. However, it is preferred to operate the polymerization zones in cascaded mode. The polymerization zones may operate in slurry, solution, or gas phase conditions or their combinations.

Suitable processes comprising cascaded slurry and gas phase polymerization stages are disclosed, among others, in WO-A-92/12182 and WO-A-96/18662.

It is often preferred to remove the reactants of the preceding polymerization stage from the polymer before introducing it into the subsequent polymerization stage. This is preferably done when transferring the polymer from one polymerization stage to another.

The catalyst may be transferred into the polymerization zone by any means known in the art. For example, it is possible to suspend the catalyst in a diluent and maintain it as homogeneous slurry, to mix the catalyst with a viscous mixture of grease and oil and feed the resultant paste into the polymerization zone or to let the catalyst settle and introduce portions of thus obtained catalyst mud into the polymerization zone.

The polymerization in the first polymerization zone is preferably conducted in slurry. Then the polymer particles formed in the polymerization, together with the catalyst fragmented and dispersed within the particles, are suspended in the fluid hydrocarbon. The slurry is agitated to enable the transfer of reactants from the fluid into the particles. The polymerization usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons and preferred diluent is propane.

The ethylene content in the fluid phase of the slurry may be from 2 to about 50 % by mol, preferably from about 2 to about 20 % by mol and in particular from about 2 to about 10 % by mol.

The temperature in the slurry polymerization is typically from 50 to 115°C, preferably from 60 to 110°C and in particular from 70 to 100°C. The pressure is from 1 to 150 bar, preferably from 10 to 100 bar.

The slurry polymerization may be conducted in any known reactor used for slurry polymerization.

Such reactors include a continuous stirred tank reactor and a loop reactor. It is especially preferred to conduct the polymerization in loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

It is sometimes advantageous to conduct the slurry polymerization above the critical temperature and pressure of the fluid mixture. Such operation is described in US-A-5391654. In such operation the temperature is typically from 80 to 110°C, preferably from 85 to 105°C and the pressure is from 30 to 150 bar, preferably from 50 to 100 bar. The slurry may be withdrawn from the reactor either continuously or intermittently. A preferred way of intermittent withdrawal is the use of settling legs where slurry is allowed to concentrate before withdrawing a batch of the concentrated slurry from the reactor. The continuous withdrawal is advantageously combined with a suitable concentration method, e.g. as disclosed in EP-A-1310295 and EP-A-1591460.

Hydrogen may be fed into the reactor to control the molecular weight of the polymer as known in the art. Furthermore, one or more comonomers selected from alpha-olefins having from 3 to 10 carbon atoms, such as 1-butene and/or 1-hexene, can be added into the reactor e.g. to control the density of the polymer product. The actual amount of such hydrogen and comonomer feeds depends on the catalyst that is used and the desired melt index (or molecular weight) and density (or comonomer content) of the resulting polymer.

The polymerization in the second polymerization zone is preferably conducted in gas phase, preferably in a fluidized bed reactor, in a fast fluidized bed reactor or in a settled bed reactor or in any combination of these. The polymerization in the second polymerization zone is more preferably conducted in a fluidized bed gas phase reactor, wherein ethylene is polymerized together with one or more comonomers selected from alpha-olefins having from 3 to 10 carbon atoms, such as 1-butene and/or 1-hexene, in the presence of a polymerization catalyst and, preferably in the presence of the reaction mixture from the first polymerization zone in an upwards moving gas stream. The reactor typically contains a fluidized bed comprising the growing polymer particles containing the active catalyst located above a fluidization grid.

The polymer bed is fluidized with the help of the fluidization gas comprising the olefin monomer, eventual comonomer(s), eventual chain growth controllers or chain transfer agents, such as hydrogen, and eventual inert gas. The fluidization gas is introduced into an inlet chamber at the bottom of the reactor. One or more of the above-mentioned components may be continuously added into the fluidization gas to compensate for losses caused, amongst others, by reaction or product withdrawal.

The fluidization gas passes through the fluidized bed. The superficial velocity of the fluidization gas must be higher that minimum fluidization velocity of the particles contained in the fluidized bed, as otherwise no fluidization would occur. On the other hand, the velocity of the gas should be lower than the onset velocity of pneumatic transport, as otherwise the whole bed would be entrained with the fluidization gas. When the fluidization gas is contacted with the bed containing the active catalyst the reactive components of the gas, such as monomers and chain transfer agents, react in the presence of the catalyst to produce the polymer product. At the same time the gas is heated by the reaction heat.

The unreacted fluidization gas is removed from the top of the reactor and cooled in a heat exchanger to remove the heat of reaction. The gas is cooled to a temperature which is lower than that of the bed to prevent the bed from heating because of the reaction. It is possible to cool the gas to a temperature where a part of it condenses. When the liquid droplets enter the reaction zone they are vaporised.

The vaporisation heat then contributes to the removal of the reaction heat. This kind of operation is called condensed mode and variations of it are disclosed, among others, in WO-A-2007/025640, USA-4543399, EP-A-699213 and WO-A-94/25495. It is also possible to add condensing agents into the recycle gas stream, as disclosed in EP-A-696293. The condensing agents are non-polymerizable components, such as n-pentane, isopentane, n-butane or isobutane, which are at least partially condensed in the cooler.

The gas is then compressed and recycled into the inlet chamber of the reactor. Prior to the entry into the reactor fresh reactants are introduced into the fluidization gas stream to compensate for the losses caused by the reaction and product withdrawal. It is generally known to analyze the composition of the fluidization gas and introduce the gas components to keep the composition constant. The actual composition is determined by the desired properties of the product and the catalyst used in the polymerization.

The catalyst may be introduced into the reactor in various ways, either continuously or intermittently. Where the gas phase reactor is a part of a reactor cascade the catalyst is usually dispersed within the polymer particles from the preceding polymerization stage.

The polymer particles may be introduced into the gas phase reactor as disclosed in EP-A-1415999 and WO-A-00/26258. Especially if the preceding reactor is a slurry reactor it is advantageous to feed the slurry directly into the fluidized bed of the gas phase reactor as disclosed in EP-A-887379, EP-A-887380, EP-A-887381 and EP-A-991684.

The polymeric product may be withdrawn from the gas phase reactor either continuously or intermittently. Combinations of these methods may also be used. Continuous withdrawal is disclosed, among others, in WO-A-00/29452. Intermittent withdrawal is disclosed, among others, in US-A-4621952, EP-A-188125, EP-A-250169 and EP-A-579426.

Also antistatic agent(s), such as water, ketones, aldehydes and alcohols, may be introduced into the gas phase reactor if needed. The reactor may also include a mechanical agitator to further facilitate mixing within the fluidized bed.

Typically the fluidized bed polymerization reactor is operated at a temperature within the range of from 50 to 100°C, preferably from 65 to 90°C. The pressure is suitably from 10 to 40 bar, preferably from 15 to 30 bar.

The polymerization of the first ethylene polymer component and second ethylene polymer component in the first and second polymerization zones may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer.

The prepolymerization step may be conducted in slurry or in gas phase. Preferably prepolymerization is conducted in slurry, preferably in a loop reactor. The prepolymerization is then preferably conducted in an inert diluent, preferably the diluent is a low-boiling hydrocarbon having from 1 to 4 carbon atoms or a mixture of such hydrocarbons.

The temperature in the prepolymerization step is typically from 0 to 90°C, preferably from 20 to 80°C and more preferably from 25 to 70°C.

The pressure is not critical and is typically from 1 to 150 bar, preferably from 10 to 100 bar.

The catalyst components are preferably all introduced to the prepolymerization step. Preferably the reaction product of the prepolymerization step is then introduced to the first polymerization zone.

It is preferred that the polymer powder of the high density polyethylene is mixed and compounded with the synthetic hydrotalcite and the optional other components in a compounding device. Said compounding device can be the extruder of the film line.

### Layer (A)

Layer (A) comprises from 60 to 100 wt.-%, preferably from 70 to 100 wt.-%, more preferably 80 to 100 wt.-%, based on the total weight of layer (A), a polyethylene composition (PE-A).

In one preferred embodiment layer (A) consists of polyethylene composition (PE-A).

Polyethylene composition (PE-A) preferably comprises from 60 to 97 wt.-%, preferably from 70 to 95 wt.-%, more preferably from 80 to 93 wt.-%, based on the total weight of the polyethylene composition (PE-A), of a linear low density polyethylene.

The linear low density polyethylene preferably is a terpolymer of ethylene with two comonomers selected from alpha-olefins having from 3 to 10 carbon atoms, preferably from 4 to 8 carbon atoms. Especially preferred are 1-butene and 1-hexene.

The linear low density polyethylene preferably has one or more or all of the following properties:

- a density in the range of from 920 to 935 $kg/m^3$, preferably from 922 to 933 $kg/m^3$, more preferably from 924 to 930 $kg/m^3$, determined according to ISO 1183;
- a melt flow rate in the range of from 0.1 to 5.0 g/10 min, preferably from 0.5 to 3.5 g/10 min, more preferably from 0.8 to 2.5 g/10 min, determined according to ISO 1133 at 2.16 kg and 190°C;
- a melting temperature Tm in the range of from 115 to 130°C, preferably from 117 to 127°C, more preferably from 118 to 125°C, determined by DSC.

The linear low density polyethylene is preferably obtainable by polymerization in the presence of a single site catalyst system. The single site catalyst system preferably comprises catalytically active metallocene compound or complex combined with a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene compound of a transition metal which bears at least one organic (coordination) ligand and exhibits the catalytic activity alone or together with a cocatalyst. The transition metal compounds are well known in the art and preferably covers compounds of metals from Group 3 to 10, e.g. Group 3 to 7, or 3 to 6, such as Group 4 to 6 of the Periodic Table, (IUPAC 2007), as well lanthanides or actinides.

In an embodiment the organometallic compound (C) has the following formula (I):

$$(L)_m R_n MX_q \qquad (I)$$

wherein

"M" is a transition metal (M) transition metal (M) of Group 3 to 10 of the Periodic Table (IUPAC 2007),
each "X" is independently a monoanionic ligand, such as a o -ligand,
each "L" is independently an organic ligand which coordinates to the transition metal "M",
"R" is a bridging group linking said organic ligands (L),
"m" is 1, 2 or 3, preferably 2,
"n" is 0, 1 or 2, preferably 1,
"q" is 1, 2 or 3, preferably 2 and
m+q is equal to the valency of the transition metal (M).

"M" is preferably selected from the group consisting of zirconium (Zr), hafnium (Hf), or titanium (Ti), more preferably selected from the group consisting of zirconium (Zr) and hafnium (Hf).

"X" is preferably a halogen, most preferably Cl.

Most preferably the organometallic compound (C) is a metallocene complex which comprises a transition metal compound, as defined above, which contains a cyclopentadienyl, indenyl or fluorenyl ligand as the substituent "L". Further, the ligands "L" may have substituents, such as alkyl groups, aryl groups, arylalkyl groups, alkylaryl groups, silyl groups, siloxy groups, alkoxy groups or other heteroatom groups or the like. Suitable metallocene catalysts are known in the art and are disclosed, among others, in WO-A-95/12622, WO-A-96/32423, WO-A-97/28170, WO-A-98/32776, WO-A-99/61489, WO-A-03/010208, WO-A-03/051934, WO-A-03/051514, WO-A-2004/085499, EP-A-1752462 and EP-A-1739103.

Most preferred the metallocene catalyst, which means the catalytically active metallocene complex, as defined above, is used together With a cocatalyst, which is also known as an activator. Suitable activators are metal alkyl compounds and especially aluminium alkyl compounds known in the art. Especially suitable activators used with metallocene catalysts are alkylaluminium oxy-compounds, such as methylaluminoxane (MAO), tetraisobutylalumoxane (TIBAO) or hexaisobutylalumoxane (HIBAO).

The linear low density polyethylene may be produced in any suitable polymerization process known in the art, which comprise at least one polymerization stage, where polymerization is typically carried out in solution, slurry, bulk or gas phase. Preferably the linear low density polyethylene is produced in a multistage polymerization process comprising at least two polymerization zones.

Preferably the same multistage process as described above for the high density polyethylene in which the process conditions are adapted within the ranges disclosed there is used for producing the linear low density polyethylene.

Linear low density polyethylenes meeting the requirements of the linear low density polyethylene as described above or below are known and can be bought from suppliers such as Borouge or Borealis.

Further, the polyethylene composition (PE-A) preferably comprises from 3 to 40 wt.-%, preferably from 5 to 30 wt.-%, more preferably from 7 to 20 wt.-%, based on the total weight of the polyethylene composition (PE-A) of a low density polyethylene

The low density polyethylene is preferably prepared in a high pressure process, more preferably a tubular high pressure process.

The low density polyethylene preferably has one or both of the following properties:

- a density in the range of from 915 to 930 $kg/m^3$, preferably from 917 to 927 $kg/m^3$, more preferably from 920 to 925 $kg/m^3$, determined according to ISO 1183;
- a melt flow rate in the range of from 0.1 to 5.0 g/10 min, preferably from 0.5 to 3.5 g/10 min, more preferably from 1.0 to 2.5 g/10 min, determined according to ISO 1133 at 2.16 kg and 190°C.

The low density polyethylene is preferably an ethylene homopolymer.

Low density polyethylenes meeting the requirements of the low density polyethylene as described above or below are known and can be bought from suppliers such as Borouge or Borealis.

The polyethylene composition (PE-A) can comprise additional polymeric components which are different from the linear low density polyethylene and the low density polyethylene. These additional polymeric components are preferably ethylene based polymers. The additional polymeric components, if present, are preferably present in an amount of up to 20 wt.-%, more preferably up to 10 wt.-%, based on the total weight of the polyethylene composition (PE-A).

The polyethylene composition (PE-A) can further comprise additives and/or admixtures. Additives are preferably selected from the group consisting of slip agents, UV-stabiliser, antioxidants, nucleating agents and mixtures thereof, preferably these additives are contained in an the range from 0 to 5000 ppm, preferably in the range from 10 to 5000 ppm and more preferably in the range from 500 to 3000 ppm, based on the total weight of the polyethylene composition (PE-A).

Admixtures are preferably selected from the group consisting of pigments, fillers, antiblocking agents and mixtures thereof, preferably these additives are contained in an the range from 0 to 5 wt.-%, preferably in the range from 0 to 3 wt.-%, more preferably in the range from 0 to 2 wt.-% and most preferably from 0 to 1 wt.-% based on the total weight of the polyethylene composition (PE-A).

The additives and/or admixtures can be added to the polyethylene composition (PE-A) in pure form or in form of one or more masterbatch(es). In a masterbatch part or all of the additives and admixtures are pre-mixed in a carrier polymer in concentrated amount. The amount of the carrier polymer of the masterbatch is calculated to the amount of the additives and admixtures, not to the amount of additional polymeric components.

In a preferred embodiment the polymeric components of the polyethylene composition (PE-A) consist of the linear low density polyethylene and the low density polyethylene. In said embodiment, the linear low density polyethylene, the low density polyethylene and the optional additives and admixtures add up to 100 wt.-% of the total weight of the polyethylene composition (PE-A).

Layer (C)

Layer (C) comprises from 60 to 100 wt.-%, preferably from 70 to 100 wt.-%, more preferably 80 to 100 wt.-%, based on the total weight of layer (C), a polyethylene composition (PE-C).

In one preferred embodiment layer (C) consists of polyethylene composition (PE-C).

Polyethylene composition (PE-C) preferably comprises from 60 to 97 wt.-%, preferably from 70 to 95 wt.-%, more preferably from 80 to 93 wt.-%, based on the total weight of the polyethylene composition (PE-C), of a linear low density polyethylene.

The linear low density polyethylene preferably is a terpolymer of ethylene with two comonomers selected from alpha-olefins having from 3 to 10 carbon atoms, preferably from 4 to 8 carbon atoms. Especially preferred are 1-butene and 1-hexene.

The linear low density polyethylene preferably has one or more or all of the following properties:

- a density in the range of from 910 to 925 kg/m$^3$, preferably from 912 to 923 kg/m$^3$, more preferably from 915 to 920 kg/m$^3$, determined according to ISO 1183;
- a melt flow rate in the range of from 0.1 to 5.0 g/10 min, preferably from 0.5 to 3.5 g/10 min, more preferably from 0.8 to 2.5 g/10 min, determined according to ISO 1133 at 2.16 kg and 190°C; and
- a melting temperature Tm in the range of from 115 to 130°C, preferably from 117 to 127°C, more preferably from 118 to 125°C, determined by DSC.

The linear low density polyethylene is preferably obtainable by polymerization in the presence of a single site catalyst system. The single site catalyst system preferably complies with the description of the single site catalyst system as described above for the linear low density polyethylene comprised in polyethylene composition (PE-A).

The linear low density polyethylene may be produced in any suitable polymerization process known in the art, which comprise at least one polymerization stage, where polymerization is typically carried out in solution, slurry, bulk or gas phase. Preferably the linear low density polyethylene is produced in a multistage polymerization process comprising at least two polymerization zones.

Preferably the same multistage process as described above for the high density polyethylene in which the process conditions are adapted within the ranges disclosed there is used for producing the linear low density polyethylene.

Linear low density polyethylenes meeting the requirements of the linear low density polyethylene as described above or below are known and can be bought from suppliers such as Borouge or Borealis.

Further, the polyethylene composition (PE-C) preferably comprises from 3 to 35 wt.-%, preferably from 5 to 26 wt.-%, more preferably from 7 to 16 wt.-%, based on the total weight of the polyethylene composition (PE-C), of a low density polyethylene.

The low density polyethylene is preferably prepared in a high pressure process, more preferably a tubular high pressure process.

The low density polyethylene preferably has one or both of the following properties:

- a density in the range of from 915 to 930 kg/m$^3$, preferably from 917 to 927 kg/m$^3$, more preferably from 920 to 925 kg/m$^3$, determined according to ISO 1183;
- a melt flow rate in the range of from 0.1 to 5.0 g/10 min, preferably from 0.5 to 3.5 g/10 min, more preferably from 1.0 to 2.5 g/10 min, determined according to ISO 1133 at 2.16 kg and 190°C.

The low density polyethylene is preferably an ethylene homopolymer.

Low density polyethylenes meeting the requirements of the low density polyethylene as described above or below are known and can be bought from suppliers such as Borouge or Borealis.

The polyethylene composition (PE-C) can comprise additional polymeric components which are different from the linear low density polyethylene and the low density polyethylene. These additional polymeric components are preferably ethylene based polymers. The additional polymeric components, if present, are preferably present in an amount of up to 20 wt.-%, more preferably up to 10 wt.-%, based on the total weight of the polyethylene composition (PE-C).

The polyethylene composition (PE-C) can further comprise additives and/or admixtures. Additives are preferably selected from the group consisting of slip agents, UV-stabiliser, antioxidants, nucleating agents and mixtures thereof, preferably these additives are contained in an the range from 0 to 5000 ppm, preferably in the range from 10 to 5000 ppm and more preferably in the range from 500 to 3000 ppm based on the total weight of the polyethylene composition (PE-C).

Admixtures are preferably selected from the group consisting of pigments, fillers, antiblocking agents and mixtures thereof, preferably these additives are contained in an the range from 0 to 5.0 wt.-%, preferably in the range from 0 to 4.5 wt.-%, more preferably in the range from 0 to 4.0 wt.-%, based on the total weight of the polyethylene composition (PE-C).

It is preferred that the polyethylene composition (PE-C) comprises from 0.1 to 5.0 wt.-%, preferably from 0.5 to 4.5 wt.-%, more preferably from 1.0 to 4.0 wt.-%, based on the total weight of the polyethylene composition (PE-C), of antiblocking agents.

The additives and/or admixtures can be added to the polyethylene composition (PE-C) in pure form or in form of one or more masterbatch(es). In a masterbatch part or all of the additives and admixtures are pre-mixed in a carrier polymer in concentrated amount. The amount of the carrier polymer of the masterbatch is calculated to the amount of the additives and admixtures, not to the amount of additional polymeric components.

In a preferred embodiment the polymeric components of the polyethylene composition (PE-C) consists of the linear low density polyethylene and the low density polyethylene. In said embodiment, the linear low density polyethylene, the low density polyethylene and the optional additives and admixtures, especially the antiblocking agents add up to 100 wt.-% of the total weight of the polyethylene composition (PE-C).

Optional layer(s) (X)

Optional layer(s) (X) preferably independently comprise from 90 to 100 wt.-%, preferably from 95 to 100 wt.-%, more preferably 100 wt.-%, based on the total weight of each layer (X), a polyethylene composition (PE-X).

Polyethylene composition (PE-X) preferably comprises

from 80.00 to 99.995 wt.-%, preferably from 85.00 to 99.99 wt.-%, more preferably from 90.0 to 99.99 wt.-% of a high density polyethylene, based on the total weight of the polyethylene composition (PE-B); and
from 50 to 1000 ppm, preferably from 75 to 700 ppm, more preferably from 100 to 500 ppm synthetic hydrotalcite, based on the total weight of the polyethylene composition (PE-B).

Preferably, the high density polyethylene has the same properties, more preferably is the same as the high density polyethylene of polyethylene composition (PE-B) of layer (B).

Polyethylene composition (PE-X) can further comprise up to 20.0 wt.-%, such as from 0 to 10.0 wt.-%, based on the total weight of the polyethylene composition (PE-X), of other components, such as additives and/or admixtures different from synthetic hydrotalcite or polymers different from high density polyethylene.

Additives are preferably selected from the group consisting of slip agents, UV-stabiliser, antioxidants, nucleating agents and mixtures thereof, preferably these additives are contained in an the range from 0 to 5000 ppm, preferably in the range from 10 to 5000 ppm and more preferably in the range from 500 to 3000 ppm based on the overall weight of the layer (B).

Admixtures are preferably selected from the group consisting of pigments, fillers and mixtures thereof, preferably these additives are contained in an the range from 0 to 5 wt.-%, preferably in the range from 0 to 3 wt.-%, more preferably in the range from 0 to 2 wt.-% and most preferably from 0 to 1 wt.-% based on the overall weight of the layer (B). Synthetic hydrotalcite usually acts as acid scavenger and anti blocking agent in film applications so that the additives typically do not include additional acid scavenger or antiblocking agent such as metal stearates.

The additives and/or admixtures can be added to the polyethylene composition (PE-X) in pure form or in form of one or more masterbatch(es). In a masterbatch part or all of the additives and admixtures are pre-mixed in a carrier polymer in concentrated amount. The amount of the carrier polymer of the masterbatch is calculated to the amount of the additives and admixtures, not to the amount of additional polymeric components.

It is preferred that the polyethylene composition (PE-X) does not contain any polymers different from the high density polyethylene.

In a preferred embodiment the polyethylene composition (PE-X) does not contain any polymers different from the high density polyethylene.

In said embodiment, the high density polyethylene, the synthetic hydrotacite and the optional additives and admixtures add up to 100 wt.-% of the total weight of the polyethylene composition (PE-X).

Each polyethylene composition (PE-X) preferably independently has properties in the same range as the polyethylene composition (PE-B) as described above or below.

The properties of each polyethylene composition (PE-X) can also be measured from the respective layer (X) of the metallized multilayer film.

It is preferred that each layer (X) independently has properties in the same range as the polyethylene composition (PE-B) as described above or below.

Optional layer(s) (Y)

Optional layer(s) (Y) preferably independently comprise from 90 to 100 wt.-%, preferably from 95 to 100 wt.-%, more preferably 100 wt.-%, based on the total weight of each layer (Y), a polyethylene composition (PE-Y).

Polyethylene composition (PE-Y) preferably comprises from 60 to 97 wt.-%, preferably from 70 to 95 wt.-%, more preferably from 80 to 93 wt.-%, based on the total weight of the polyethylene composition (PE-C), of a linear low density polyethylene.

Preferably, the linear low density polyethylene has the same properties, more preferably is the same as the linear low density polyethylene of polyethylene composition (PE-C) of layer (C).

Further, the polyethylene composition (PE-Y) preferably comprises from 3 to 35 wt.-%, preferably from 5 to 26 wt.-%, more preferably from 7 to 16 wt.-%, based on the total weight of the polyethylene composition (PE-Y), of a low density polyethylene.

Preferably, the low density polyethylene has the same properties, more preferably is the same as the low density polyethylene of polyethylene composition (PE-C) of layer (C).

The polyethylene composition (PE-Y) can comprise additional polymeric components which are different from the linear low density polyethylene and the low density polyethylene. These additional polymeric components are preferably ethylene based polymers. The additional polymeric components, if present, are preferably present in an amount of up to 20 wt.-%, more preferably up to 10 wt.-%, based on the total weight of the polyethylene composition (PE-Y).

The polyethylene composition (PE-Y) can further comprise additives and/or admixtures. Additives are preferably selected from the group consisting of slip agents, UV-stabiliser, antioxidants, nucleating agents and mixtures thereof, preferably these additives are contained in an the range from 0 to 5000 ppm, preferably in the range from 10 to 5000 ppm and more preferably in the range from 500 to 3000 ppm based on the total weight of the polyethylene composition (PE-Y).

Admixtures are preferably selected from the group consisting of pigments, fillers, antiblocking agents and mixtures thereof, preferably these additives are contained in an the range from 0 to 5 wt.-%, preferably in the range from 0 to 3 wt.-%, more preferably in the range from 0 to 2 wt.-% and most preferably from 0 to 1 wt.-% based on the total weight of the polyethylene composition (PE-Y).

The additives and/or admixtures can be added to the polyethylene composition (PE-Y) in pure form or in form of one or more masterbatch(es). In a masterbatch part or all of the additives and admixtures are pre-mixed in a carrier polymer in concentrated amount. The amount of the carrier polymer of the masterbatch is calculated to the amount of the additives and admixtures, not to the amount of additional polymeric components.

In a preferred embodiment the polymeric components of the polyethylene composition (PE-Y) consists of the linear low density polyethylene and the low density polyethylene. In said embodiment, the linear low density polyethylene, the low density polyethylene and the optional additives and admixtures add up to 100 wt.-% of the total weight of the polyethylene composition (PE-Y).

Process

In a third aspect the present invention relates to a process for producing the multilayer film as described above or below comprising the steps of:

- Providing the polyethylene compositions (PE-A), (PE-B) and (PE-C);
- Extruding, preferably coextruding the polyethylene compositions (PE-A), (PE-B) and (PE-C) to produce layers (A), (B) and (C) of the multilayer film;
  Surface treating the outer surface of layer (A).

In a further process step the surface treated outer surface of layer (A) can be metallized to obtain a metallized multilayer film.

It is preferred that the components of the polyethylene compositions (PE-A), (PE-B) and (PE-C), and optionally polyethylene compositions (PE-X) and/or (PE-Y), as described above or below are not pre-compounded but added to the extruders during the extrusion step to produce the multilayer film.

Thus, the step of providing the polyethylene compositions (PE-A), (PE-B) and (PE-C), and optionally polyethylene compositions (PE-X) and/or (PE-Y), preferably comprises the steps of:
Providing the different components of the polyethylene compositions (PE-A), (PE-B) and (PE-C), and optionally polyethylene compositions (PE-X) and/or (PE-Y), and adding these components to the different extruders in the extrusion step to produce the multilayer film.

The polyethylene compositions (PE-A), (PE-B) and (PE-C), and optionally polyethylene compositions (PE-X) and/or (PE-Y), can be extruded individually to form individual layers (A), (B) and (C) and optionally layer(s) (X) and/or (Y).

The individual layers (A), (B) and (C) and optionally layer(s) (X) and/or (Y) can in a second step then be laminated to form the multilayer film.

The individual layers (A), (B) and (C) and optionally layer(s) (X) and/or (Y) can extruded in a cast film line or a blown film line.

It is also possible to coextrude part of the layers (A), (B) and (C) and optionally layer(s) (X) and/or (Y) in a coextrusion line, such as a multilayer cast film line or a multilayer blown film line and laminate the coextruded layers with the other layers to form the multilayer film.

It is, however, preferred that the polyethylene compositions (PE-A), (PE-B) and (PE-C), and optionally polyethylene compositions (PE-X) and/or (PE-Y), are coextruded to form the multilayer film.

Coextrusion can be conducted in a multilayer cast film line or a multilayer blown film line.

The extrusion conditions are preferably adapted to the polyethylene compositions (PEA), (PE-B) and (PE-C), and optionally polyethylene compositions (PE-X) and/or (PE-Y).

For polyethylene composition (PE-B) it is preferred that the melt temperature in the range of from 200 to 225 °C, preferably from 205 to 220 °C.

After obtaining the multilayer film, the outer surface of layer (A) is surface treated.

In principle all forms of surface treatments for polyethylene films, such as plasma treatment, are suitable.

It is preferred that the outer surface of layer (A) is Corona treated.

It is preferred that the Corona level is in the range of from 30 to 60 dynes/cm, more preferably from 40 to 50 dynes/cm.

After surface treatment the outer surface of layer (A) can metallized for obtaining a metallized multilayer film.

Usually, the metal, such as aluminium, is subjected onto the outer surface of layer (A) by a suitable deposition method, such as vapour deposition.

The metal layer, preferably aluminium layer usually has a thickness of not more than 1.0 $\mu$m such as from 0.01 to 1.0 $\mu$m.

It is preferred that all embodiments and properties of the polyethylene compositions (PEA), (PE-B) and (PE-C), and optionally polyethylene compositions (PE-X) and/or (PE-Y), the multilayer film and the metallized multilayer film as described above or below also apply to the process of the invention.

Use

In a fourth aspect the present invention relates to the use of a polyethylene composition (PE-B) comprising

- from 95.00 to 99.995 wt.-%, preferably from 97.50 to 99.99 wt.-%, more preferably from 99.0 to 99.99 wt.-% of a high density polyethylene, based on the total weight of the polyethylene composition (PE-B); and
- from 50 to 1000 ppm, preferably from 75 to 700 ppm, more preferably from 100 to 500 ppm synthetic hydrotalcite, based on the total weight of the polyethylene composition (PE-B)

in a core layer (B) in an amount of from 90 to 100 wt.-%, preferably from 95 to 100 wt.-%, more preferably 100 wt.-%, based on the total weight of layer (B) for producing a multilayer film having an outer layer (A) that is surface-treated, the core layer (B) and an outer sealing layer (C),

wherein

the surface treated layer (A) shows a surface treatment retainment (STR at time t) after t =28 days of at least 92.0%, with STR at time t being calculated according to the following formula:

$$STR \; at \; time \; t = 100\% - \frac{(surface \; energy \; at \; time \; 0 - surface \; energy \; at \; time \; t)}{surface \; energy \; at \; time \; 0} \cdot 100\%.$$

In a preferred embodiment the outer layer (A) is metallized after the outer layer (A) has been surface-treated and the metallized multilayer film has an oxygen transmission rate (OTR) of not more than 125 cc/m$^2$·d, preferably not more than 100 cc/m$^2$·d, when determined under constant conditions of 23°C and 0% RH, and a water vapour transmission rate of not more than 0.60 g/m$^2$·d, preferably not more than 0.55 g/m$^2$·d, more preferably not more than 0.50 g/m$^2$·d, when determined under constant conditions of 38°C and 90% RH.

It is preferred that all embodiments and properties of the polyethylene compositions (PEA), (PE-B) and (PE-C), and optionally polyethylene compositions (PE-X) and/or (PE-Y), the multilayer film, the metallized multilayer film and the process for producing the metallized multilayer film as described above or below also apply to the use of the invention.

The invention will now be described with reference to the following non-limiting examples.

## Examples

### 1. Measurement methods

### Surface tension

In order to determine the surface energy of a film using the dyne test, a series of mixtures of solvents of gradually increasing surface tension were applied to the surface of the plastic film until a mixture was obtained that just wets the film surface. The wetting tension of the surface under test was approximated by the surface tension of this particular mixture. Wetting time of 4 seconds was used to evaluate the solvent interactions: if the solution is making droplets approximately close to 4 seconds, the surface energy of the film surface is approximately equal to the surface energy of the solutions.

### Oxygen transmission rate (OTR)

Oxygen Transmission Rate is the rate of oxygen transmission measured by coulometric detector of OTR device. Dry nitrogen gas as a carrier was swept through a chamber, the test film acted as the membrane separating this stream from an oxygen stream on the other side. The partial pressure difference created a driving force for oxygen molecules to diffuse through the film to the low pressure side. The film barrier determines the rate of oxygen permeation, and this was continuously measured by coulometric sensor in the outgoing stream of the nitrogen side. The test was completed when equilibrium, or steady state, was achieved; that is, it was complete when the sensor detected a constant amount of oxygen in the nitrogen carrier stream. Test was performed under constant conditions of 23°C and 0% RH.

### Water vapour transmission rate (WVTR)

Water Vapour transmission rate is the rate at which water vapor permeates through a film at specified conditions of temperature and relative humidity. Dry nitrogen gas was swept through a chamber where the test film acted as the membrane separating this dry gas stream from a "wet" nitrogen stream on the other side. The partial pressure difference created a driving force for the water vapor to permeate through the film to the low pressure side. The barrier of the film determines how much water vapor can transfer, and this was continuously measured by an infrared detector in the outgoing stream of the dry side. Test was performed under constant conditions of 38°C and 90% RH.

### Tensile strength

Tensile strength represents the force that the film can withstand from external forces such as poking or tearing. Tensile strength of the film was measured on both machine direction (MD) and transverse direction (TD). The more these values are close to each other (and their ratio close to 1), the more the film can be considered isotropic. Test was performed according to ISO 527 -3 standard.

**Optical Density**

The optical density of the metallized film is evaluated as a logarithmic measurement of the incident optical radiation divided by the radiation energy transmitted. It can be represented by the equation, A = log10 (100 / %T).

**Coefficient of friction (COF)** - **dynamic**

Dynamic Coefficient of Friction is an industry standard for measuring a surface's slip resistance and it measures slip resistance during motion. Coefficient of friction defines as the ratio of the frictional force to the normal force of two surface in contact which being dragged across each other at specified test conditions. Frictional force represents the resistance of the surface to the movement, therefore it has opposite direction from the movement direction. Test was performed according to ASTM D1894.

**Surface roughness**

Surface roughness of film samples were determined using a Bruker Contour GT-K Optical Profiler. Measurements were carried out with 20x large area aperture in White Light Interferometry / Vertical Scanning Interferometry (VSI) mode, with vertical resolution of 3nm (rms). With the 20x aperture, area of 300 $\mu$m x 240 $\mu$m of the film sample was analyzed. The most important surface roughness information obtained from line or area profile analyses are given below:

Sa: Average surface roughness, which expresses, as an absolute value, the difference in height of each point compared to the arithmetical mean of the surface.

$$S_a = \iint_a |Z(x,y)| dx dy$$

Sq: Root Mean Square Roughness, which represents the root mean square value of ordinate values within the definition area. It is equivalent to the standard deviation of heights.

$$Sq = \sqrt{\iint_a (Z(x,y))^2 dx dy}$$

Sp: Peak height, is the height of the highest peak within the defined area.
Sv: Maximum valley height), is the absolute value of the height of the largest valley (or pit) within the defined area
Sz: Maximum height, which is Sp+Sv

**Melt Flow Rate:**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The $MFR_5$ of polyethylene was measured at a temperature of 190 °C and a load of 5 kg, the $MFR_2$ of polyethylene at a temperature of 190 °C and a load of 2.16 kg and the

$MFR_{21}$ of polyethylene was measured at a temperature of 190 °C and a load of 21.6 kg. The quantity FRR (flow rate ratio) denotes the ratio of flow rates at different loads. Thus, $FRR_{21/5}$ denotes the value of $MFR_{21}/MFR_5$, $FRR_{21/2}$ denotes the value of $MFR_{21}/MFR_2$ and $FRR_{5/2}$ denotes the value of $MFR_5/MFR_2$.

**Density:**

Density of the polymer was measured according to ISO 1183-1:2004 Method A on compression moulded specimen prepared according to EN IS0 1872-2 (Feb 2007) and is given in kg/m$^3$.

**DSC analysis, melting temperature (Tm) and heat of fusion (Hf), crystallization temperature (Tc) and melt enthalpy (Hm):**

Measured with a TA Instrument Q2000 differential scanning calorimetry (DSC) on 5 to 7 mg samples. DSC was run according to ISO 11357 / part 3 /method C2 in a heat / cool / heat cycle with a scan rate of 10 °C/min in the temperature range of 0 to +200 °C. The crystallization temperature (Tc) was determined from the cooling step, while melting temperature (Tm) and melting enthalpy (ΔHm) were determined from the second heating step. The crystallinity was calculated from the melting enthalpy by assuming an ΔHm-value of 290 J/g for a fully crystalline polyethylene (see L. Mandelkern, R. G. Alamo, In Physical properties of polymers handbook, 2nd ed., Mark, J.E., Eds. Springer: New York, 2007)

**Dynamic Rheology:**

The characterization of polymer melts by dynamic shear measurements complies with ISO standards 6721-1 and 6721-10. The measurements were performed on an Anton Paar MCR301 stress controlled rotational rheometer, equipped with a 25 mm parallel plate geometry. Measurements were undertaken on compression moulded plates using nitrogen atmosphere and setting a strain within the linear viscoelastic regime. The oscillatory shear tests were done at 190°C applying a frequency range between 0.01 and 600 rad/s and setting a gap of 1.2 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \tag{1}$$

If the applied strain is within the linear viscoelastic regime, the resulting sinusoidal stress response can be given by

$$\sigma(t) = \sigma_0 \sin(\omega t + \delta) \tag{2}$$

where $\sigma_0$, and $\gamma_0$ are the stress and strain amplitudes, respectively; $\omega$ is the angular frequency; $\delta$ is the phase shift (loss angle between applied strain and stress response); t is the time.

Dynamic test results are typically expressed by means of several different rheological functions, namely the shear storage modulus, G', the shear loss modulus, G", the complex shear modulus, G*, the complex shear viscosity, $\eta^*$, the dynamic shear viscosity, $\eta'$, the out-of-phase component of the complex shear viscosity, $\eta''$ and the loss tangent, tan $\eta$, which can be expressed as follows:

$$G' = \frac{\sigma_0}{\gamma_0} \cos\delta \; [Pa] \tag{3}$$

$$G'' = \frac{\sigma_0}{\gamma_0} \sin\delta \; [Pa] \tag{4}$$

$$G^* = G' + iG'' \; [Pa] \tag{5}$$

$$\eta^* = \eta' - i\eta'' \; [Pa \cdot s] \tag{6}$$

$$\eta' = \frac{G''}{\omega} \; [Pa \cdot s] \tag{7}$$

$$\eta'' = \frac{G'}{\omega} \; [Pa \cdot s] \tag{8}$$

The determination of so-called Shear Thinning Index, which correlates with MWD and is independent of Mw, is done as described in equation 9.

$$SHI_{(x/y)} = \frac{Eta^* \; for \; (G^* = x \; kPa)}{Eta^* \; for \; (G^* = y \; kPa)} \tag{9}$$

For example, the $SHI_{(2.7/210)}$ is defined by the value of the complex viscosity, in Pa s, determined for a value of G* equal to 2.7 kPa, divided by the value of the complex viscosity, in Pa s, determined for a value of G* equal to 210 kPa and the

$SHI_{(5/200)}$ is defined by the value of the complex viscosity, in Pa s, determined for a value of G* equal to 5 kPa, divided by the value of the complex viscosity, in Pa s, determined for a value of G* equal to 200 kPa.

The values of storage modulus (G'), loss modulus (G"), complex modulus (G*) and complex viscosity ($\eta$*) were obtained as a function of frequency ($\omega$).

Thereby, e.g. $\eta^*_{300rad/s}$ (eta*$_{300rad/s}$) is used as abbreviation for the complex viscosity at the frequency of 300 rad/s and $\eta^*_{0.05rad/s}$ (eta*$_{0.05rad/s}$) is used as abbreviation for the complex viscosity at the frequency of 0.05 rad/s, and $\eta^*_{0rad/s}$ (eta*$_{0rad/s}$) is used as abbreviation for the complex viscosity at the frequency of 0 rad/s or zero shear viscosity.

The loss tangent tan (delta) is defined as the ratio of the loss modulus (G") and the storage modulus (G') at a given frequency. Thereby, e.g. $tan_{0.05}$ is used as abbreviation for the ratio of the loss modulus (G") and the storage modulus (G') at 0.05 rad/s and $tan_{300}$ is used as abbreviation for the ratio of the loss modulus (G") and the storage modulus (G') at 300 rad/s.

The elasticity balance $tan_{0.05}/tan_{300}$ is defined as the ratio of the loss tangent $tan_{0.05}$ and the loss tangent $tan_{300}$.

Besides the above mentioned rheological functions one can also determine other rheological parameters such as the so-called elasticity index *EI(x)*. The elasticity index *Ei(x)* is the value of the storage modulus, G' determined for a value of the loss modulus, G" of x kPa and can be described by equation 10.

$$EI(x) = G' \, for \, (G'' = x \, kPa) \, [\text{Pa}] \qquad (10)$$

For example, the EI(5kPa) is the defined by the value of the storage modulus G', determined for a value of G" equal to 5 kPa.

The polydispersity index, *PI,* is defined by equation 11.

$$PI = \frac{10^5}{G'(\omega_{COP})}, \qquad \omega_{COP} = \omega \, for \, (G' = G'') \qquad (11)$$

where $\omega_{COP}$ is the cross-over angular frequency, determined as the angular frequency for which the storage modulus, G', equals the loss modulus, G".

The values are determined by means of a single point interpolation procedure, as defined by Rheocompass software. In situations for which a given G* value is not experimentally reached, the value is determined by means of an extrapolation, using the same procedure as before. In both cases (interpolation or extrapolation), the option from Rheocompass *"Interpolate y-values to x-values from parameter"* and the *"logarithmic interpolation type"* were applied.

References:

[1] "Rheological characterization of polyethylene fractions", Heino, E.L., Lehtinen, A., Tanner J., Seppälä, J., Neste Oy, Porvoo, Finland, Theor. Appl. Rheol., Proc. Int. Congr. Rheol., 11th (1992), 1, 360-362.

[2] "The influence of molecular structure on some rheological properties of polyethylene", Heino, E.L., Borealis Polymers Oy, Porvoo, Finland, Annual Transactions of the Nordic Rheology Society, 1995.

[3] "Definition of terms relating to the non-ultimate mechanical properties of polymers", Pure & Appl. Chem., Vol. 70, No. 3, pp. 701-754, 1998.

**Molecular weight**

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99 using the following formulas:

$$M_n = \frac{\sum_{i=1}^{N} A_i}{\sum (A_i/M_i)} \qquad (1)$$

$$M_w = \frac{\sum_{i=1}^{N} (A_i x \, M_i)}{\sum A_i} \qquad (2)$$

$$M_z = \frac{\sum_{i=1}^{N}(A_i \: x \: M_i^2)}{\sum(A_i/M_i)} \qquad\qquad (3)$$

For a constant elution volume interval ΔVi, where Ai and Mi are the chromatographic peak slice area and polyolefin molecular weight (MW). A GPC instrument, equipped with infrared (IR) detector was used with 3 x Olexis and 1x Olexis Guard columns and 1,2,4-trichlorobenzene (TCB, stabilized with 250 mg/L 2,6-Di tert butyl-4-methyl-phenol) as solvent at 160 °C and at a constant flow rate of 1 mL/min. 200 μL of sample solution were injected per analysis. The column set was calibrated using universal calibration (according to ISO 16014-2:2003) with at least 15 narrow MWD polystyrene (PS) standards in the range of 0,5 kg/mol to 11 500 kg/mol. Mark Houwink constants for PS, PE and PP used are as described per ASTM D 6474-99. All samples were prepared by dissolving 5.0 - 9.0 mg of polymer in 8 mL (at 160 °C) of stabilized TCB (same as mobile phase) for 2.5 hours for PP or 3 hours for PE at 160°C under continuous gentle shaking in the autosampler of the GPC instrument.

**Xylene Soluble Fraction**

ISO 16152:2005 Plastics - Determination of xylene-soluble matter in polypropylene. A weighed quantity of a sample was dissolved in hot xylene under reflux conditions, then cooled and maintained at 25 °C to ensure controlled gel formation of the insoluble fraction. The solution was filtrated and the xylene soluble fraction was recovered by evaporation of the xylene and determined by weighing the residue.

**Yellowing Index**

ASTM E 313:2010 Standard Practice for Calculating Yellowness and Whiteness Indices from Instrumentally Measured Color Coordinates. This method is intended to determine the degree of yellowness of polyolefin sample. The yellowness index (YI) measurement is applicable to transmittance of transparent and translucent plastics and the reflectance of opaque plastics. The yellowness index is expressed as a color difference compared to magnesium oxide standard, which is the standard White. The method measures the magnitude of yellowness index (YI) by XYZ-coordinates or CIELAB -coordinates.

**2. Components**

The high density polyethylene HDPE was polymerized in a Borstar® plant comprising a prepolymerization loop reactor, a loop reactor and a gas phase reactor, whereby the slurry from the prepolymerization reactor was withdrawn intermittently and directed into the loop reactor, subsequently the slurry was withdrawn from the loop reactor intermittently by using settling legs and directed to a flash vessel operated at a temperature of 50°C and a pressure of 3 bar and from there the polymer was directed to the gas phase reactor (GPR).

The polymerization catalyst for polymerizing the HDPE was prepared according to example 1 of EP 1 378 528 A1

The polymerization conditions are listed in Table 1 below.

Table 1: Polymerization conditions of the high density polyethylene HDPE

|  |  | HDPE |
|---|---|---|
| **Prepolymeriser:** |  |  |
| Temperature | °C | 70.0 |
| Pressure | bar | 64.39 |
| Split | wt.-% | 1.32 |
| Catalyst feed | kg/h r | 3.62 |
| C2 feed | kg/hr | 600 |
| H2 feed | kg/hr | 1.65 |
| C4 feed | kg/hr | 29.93 |
| **Loop:** |  |  |
| Temperature | °C | 95.0 |
| Pressure | bar | 65.00 |

(continued)

| Loop: | | |
|---|---|---|
| C2-concentration | mol% | 2.36 |
| H2/C2 molar ratio | mol/kmol | 575.13 |
| C4/C2 molar ratio | mol/kmol | 12.11 |
| C2 feed | kg/h | 18218 |
| Split | wt.-% | 43.57 |
| Gas phase: | | |
| Temperature | °C | 85.0 |
| Pressure | bar | 18.86 |
| H2/C2 molar ratio | mol/kmol | 112.7 |
| C4/C2 molar ratio | mol/kmol | 16.00 |
| C2 feed | kg/h | 22933 |
| Split | wt.-% | 55.11 |

FK2715     multimodal ethylene/1-butene/1-hexene terpolymer having a melt flow rate $MFR_2$ of 1.3 g/10 min and a density of 927 kg/m$^3$, commercially available from Borouge;

FK1820     multimodal ethylene/1-butene/1-hexene terpolymer having a melt flow rate $MFR_2$ of 1.5 g/10 min and a density of 918 kg/m$^3$, commercially available from Borouge;

FT6230     tubular LDPE having a melt flow rate $MFR_2$ of 2.0 g/10 min and a density of 923 kg/m$^3$, commercially available from Borouge;

FE3000     tubular LDPE having a melt flow rate $MFR_2$ of 0.30 g/10 min and a density of 923 kg/m$^3$, commercially available from QAPCO;

AO-1     Additive one pack comprising 0.02 wt.-% Irganox 1010 CAS No. 6683-19-8, commercially available from BASF, 0.08 wt.-% Irgafos 168 CAS No. 31570-04-4 commercially available from BASF, 1 wt.-% CaSt;

AO-2     Additive one pack comprising 0.02 wt.-% Irganox 1010 CAS No. 6683-19-8, commercially available from BASF, 0.08 wt.-% Irgafos 168 CAS No. 31570-04-4 commercially available from BASF, 0.045 wt.-% DHT;

CaSt     Calcium stearate CAS No. 1592-23-0;

DHT     DHT-4C, synthetic Mg-Al hydrotalcite, commercially available from Kisuma Chemicals;

AB-MB     Synthetic silica antiblock masterbatch comprising 5.5% active ingredient content, commercially available from Astra Polymers.

**3. Polyethylene compositions PE-B**

For core layer B the polyethylene compositions PE-B IE1 and CE1 were produced by compounding the reactor-made HDPE powder with the AO-1 and either CaSt or DHT. The amounts of the components and the properties of IE1 and CE1 are listed below in Table 2.

Table 2: Composition and properties of IE1 and CE1

| | IE1 | CE1 |
|---|---|---|
| **Composition** | | |
| HDPE (wt.-%) | ad 100 | ad 100 |

(continued)

|  | IE1 | CE1 |
|---|---|---|
| **Composition** | | |
| AO-1 (ppm) | - | 2000 |
| AO-2 (ppm) | 1450 | - |
| CaSt (in AO-1) (ppm) | - | 1000 |
| DHT (in (AO-2) (ppm) | 450 | - |
| **Properties compounded composition** | | |
| Density ($kg/m^3$) | 959.3 | 959.4 |
| Crystallization Temperature (°C) | 119.8 | 120.1 |
| Crystallization Enthalpy (J/g) | 227.0 | 178.4 |
| Melting Temperature (°C) | 131.8 | 131.5 |
| Melting Enthalpy (J/g) | 226.0 | 178.4 |
| Crossover frequency (rad/s) | 35.8 | 34.2 |
| Crossover modulus (Pa) | 63590 | 63143 |
| PI Rheology (1/s) | 1.57 | 1.58 |
| Zero-shear viscosity (Pa.s) | 26280 | 25391 |
| Mn (g/mol) | 9450 | 9350 |
| Mw (g/mol) | 142800 | 144750 |
| Mw/Mn (g/mol) | 15.1 | 15.5 |
| Mz (g/mol) | 717100 | 698950 |
| Mp (g/mol) | 41900 | 44250 |
| $MFR_2$ (g/10min) | 0.78 | 0.68 |
| $MFR_5$ (g/10min) | 2.40 | 2.41 |
| $MFR_{21}$ (g/10min) | 40.9 | 42.1 |
| $FRR_{21/2}$ | 52 | 62 |
| $FRR_{5/2}$ | 3.08 | 3.54 |
| $FRR_{21/5}$ | 17.04 | 17.47 |
| Xylene soluble fraction (wt.-%) | 1.90 | 2.03 |
| Yellowing Index | -5.98 | -5.79 |

## 4. Multilayer films

Three-layer films IEF1 and CEF1 were produced using a blown film line from Polyrema. Thereby, PE-B composition IE1 was used for the core layer B in IEF1, whereas PE-B composition CE1 was used for the core layer B in CEF1. Outer layer A and inner layer C had the same composition.

Additionally, five-layer films IEF2, IEF3, and IEF4 were produced using a multilayer blown film line from Reifenhäuser.

Thereby, PE-B composition IE1 was used for the core layer B in all of IEF2, IEF3, and IEF4.

The outer layer A of each multilayer film was corona-treated at 42 dyne/cm.

The composition of the three-layer films IEF1 and CEF1 and of the five-layer films IEF2, IEF3, and IEF4 as well as the thicknesses of the film layers are listed in Table 3 below.

Table 3: Composition and layer thicknesses of IEF1-IEF4 and CEF1

|  |  | Thickness [μm] | Composition |
|---|---|---|---|
| IEF1 | Outer layer (Layer A) | 10 | 90% FK2715 + 10% FT6230 |
|  | Core layer (Layer B) | 20 | 100% IE1 |
|  | Inner layer/seal (Layer C) | 10 | 88% FK1820 + 10% FT6230 + 2% AB MB |
| IEF2 | Treated (Layer A) | 7.5 | 90% FK2715 + 10% FE3000 |
|  | Semi-Outer (X) | 10 | 100% IE1 |
|  | Core (Layer B) | 17.5 | 100% IE1 |
|  | Semi-Inner (Y) | 7.5 | 90% FK1820 + 10% FE3000 |
|  | Non treated (Layer C) | 7.5 | 87% FK1820 + 10% FE3000 + 3% AB MB |
| IEF3 | Treated (Layer A) | 4.5 | 90% FK2715 + 10% FE3000 |
|  | Semi-Outer (X) | 6 | 100% IE1 |
|  | Core (Layer B) | 10.5 | 100% IE1 |
|  | Semi-Inner (Y) | 4.5 | 90% FK1820 + 10% FE3000 |
|  | Non treated (Layer C) | 4.5 | 87% FK1820 + 10% FE3000 + 3% AB MB |
| IEF4 | Treated (Layer A) | 4.5 | 90% FK2715 + 10% FE3000 |
|  | Semi-Outer (X) | 6 | 100% IE1 |
|  | Core (Layer B) | 10.5 | 100% IE1 |
|  | Semi-Inner (Y) | 4.5 | 90% FK1820 + 10% FE3000 |
|  | Non treated (Layer C) | 4.5 | 87% FK1820 + 10% FE3000 + 3% AB MB |
| CEF 1 | Outer layer (Layer A) | 10 | 90% FK2715 + 10% FT6230 |
|  | Core layer (Layer B) | 20 | 100% CE1 |
|  | Inner layer/seal (Layer C) | 10 | 88% FK1820 + 10% FT6230 + 2% AB MB |

The production parameters for the two three-layer films IEF1 and CEF1 are listed in Table 4 below

Table 4: Production parameters for IEF1 and CEF 1

| Layer | Parameters | Unit | IEF1 | CEF1 |
|---|---|---|---|---|
| **Outer layer (Layer A)** | Outr Lyr Extr Melt temp. | °C | 210 | 211 |
| | Outr Lyr Extr Melt Press. | bar | 240 | 241 |
| | Outr Lyr Extr Screw speed | rpm | 37.2 | 36.9 |
| | Outr Lyr Extr Motor Load | % | 18.8 | 18.8 |
| | Outr Lyr Extr Throughput | Kg/h | 76.2 | 36.9 |
| | Outr Lyr_Film Thick | μm | 10 | 10 |
| **Core layer (Layer B)** | Mid Lyr Ext Melt temp. | °C | 211 | 202 |
| | Mid Lyr Ext Melt Press. | bar | 220 | 293 |
| | Mid Lyr Ext Screw speed | Rpm | 36.7 | 44.8 |
| | Mid Lyr Ext Motor Load | % | 18.8 | 23.2 |
| | Mid Lyr Ext Throughput | kg/h | 37 | 76.9 |
| | Mid Lyr_Film Thick | μm | 20 | 20 |
| **Inner Layer (Layer C)** | Inr Lyr Ext Melt temp. | °C | 211 | 212 |
| | Inr Lyr Ext Melt Press. | bar | 220 | 222 |
| | Inr Lyr Ext Screw speed | Rpm | 36.7 | 36.1 |
| | Inr Lyr Ext Motor Load | % | 18.8 | 18.6 |
| | Inr Lyr Ext Throughput | kg/h | 37.0 | 36.4 |
| | Inr Lyr_Film Thick | μm | 10 | 10 |
| | Die Diameter | mm | 180 | 180 |

| | | | | |
|---|---|---|---|---|
| | Die Gap | mm | 1.5 | 1.8 |
| | Total Throughput | kg/h | 150.2 | 150.2 |
| | Film Total Thickness | μm | 40 | 40 |
| | BUR | (mm)/(mm) | 2.5 | 2.51 |
| | Draw Down Ratio | ((mm)/(μm))*(1/((mm)/(mm))) | 15.0 | 17.9 |
| | Take-Off Speed | m/min | 47.3 | 47.3 |
| | Bubble Stability | | ok | ok |
| | Corona energy | % | 36 | 36 |
| | Corona level | dynes/cm | 44 | 44 |

Figure 1 shows the Corona treatment decay curves at ambient conditions of the non metallized films of three-layer films IEF1 (identified as IE1 in figure) and CEF1 (identified as CE1 in figure) as surface treatment retention over time. During the production, both the films were Corona treated at 42 dyne/cm, and the production date was taken as day 0.

Percentage of Corona retainement, after a certain time t is evaluated as:

$$100\% - \frac{(surface\ energy\ at\ time\ 0 - surface\ energy\ at\ time\ t)}{surface\ energy\ at\ time\ 0} \cdot 100\%$$

As can be seen in Figure 1, the corona treatment decay for the IEF1 has significantly lower slope than the CEF1, allowing a better retainment of the surface treatment, especially in the first 3 weeks. This is a big benefit for those application in which metallization happens immediately after the film production, since it allows, if same film storage conditions are applied, to obtain a more uniform and better adhesion of the metal layer. After 6 weeks (42 days) from the treatment, the IEF1 retains more than 90% of the initial treatment, on the contrary of CEF1. This has very important consequences on the metallization application, since it allows a better preservation of the film surface properties during the film storage in the timeframe between production and metallization, leading to a better metal layer adhesion and metallization performances.

Corona-treated outer layer A was metallized with aluminium by a vapour deposition metallization procedure keeping a constant optical density of 2.16. After Al-metallization of Corona-treated outer layer A the barrier properties water vapour transmission rate (WVTR) and oxygen transmission rate (OTR) as well as the optical density of all films IEF1-IEF4 and CEF1 were determined.

The barrier properties of IEF1-IEF4 and CEF1 are listed in Table 5 below.

Table 5: Barrier properties of metallized films IEF1-IEF4 and CEF1

| Film | Optical density | WVTR [g/m²*d] | OTR [cc/m²*d] |
|------|-----------------|---------------|----------------|
| IEF1 | 2.16 | 0.46 | 25.18 |
| IEF2 | 2.2 | 0.21 | 95.72 |
| IEF3 | 2.5 | 0.11 | 84.46 |
| IEF4 | 2.5 | 0.08 | 95.79 |
| CEF1 | 2.16 | 0.63 | 36.22 |

The improved metal adhesion due to a better surface treatment retention, allows to have better barrier properties, as can be seen from the direct comparison between IEF1 and CEF1.

Further, from metallized five-layer films IEF2-IEF4 the mechanical properties were determined and listed in Table 6 below.

Table 6: mechanical properties of metallized IEF2-IEF4

| Film | Tensile stress ratio MDITD | COF |
|------|-----------------------------|------|
| IEF2 | 0.89 - 1.12 | 0.355 |
| IEF3 | 0.92 - 1.09 | 0.357 |
| IEF4 | 0.96 - 1.04 | 0.335 |

Further, from metallized and non-metallized three-layer films IEF1 and CEF1 the surface roughness with 20x aperture (315 $\mu$m x 235 $\mu$m) has been determined and listed in Table 7 below.

Table 7: Surface roughness measurements of metallized and non-metallized IEF1 and CEF1

| Film | Roughness Parameter | Sa (nm) | Sp (nm) | Sv (nm) | Sz (nm) |
|------|---------------------|---------|---------|---------|---------|
| CEF1, metallized | Mean | 41 | 694 | 342 | 1036 |
| | Range | 30-60 | 435-1200 | 188 - 460 | 761-1537 |
| IEF1, metallized | Mean | 51 | 809 | 492 | 1448 |
| | Range | 29-77 | 254-1176 | 275-1209 | 978 - 2068 |
| CEF1, non metallized | Mean | 43 | 868 | 552 | 1364 |
| | Range | 38 - 50 | 584 - 1363 | 434 - 869 | 1180 - 1832 |
| IEF1, non metallized | Mean | 52 | 790 | 698 | 1488 |
| | Range | 37-87 | 697 - 980 | 362 - 1551 | 1488 - 2277 |

Samples of IEF1 show occasional "spikes" due to effect of inorganic additives present in the core layer composed of the inventive resin. Large agglomerates are not seen in IEF1, which indicate good dispersion of this additive in the core layer. Mean roughness and other roughness parameters are higher for the IEF1. Roughness parameters of these films should be taken as an indicative trends, due to high Sp (peak height) and Sv (valley depth) caused by discrete particles, and can vary depending on synthetic hydrotalcite concentrations and processing conditions. Roughness of the film decreases after metallization, due to uniform coating of Al layer onto the film surface.

**Claims**

1. A multilayer film comprising at least three layers (A), (B) and (C), wherein

   • layer (B) is the core layer of the multilayer film and comprises from 90 to 100 wt.- %, preferably from 95 to 100 wt.-%, more preferably 100 wt.-%, based on the total weight of layer (B), of a polyethylene composition (PE-B) comprising from 95.00 to 99.995 wt.-%, preferably from 97.50 to 99.99 wt.-%, more preferably from 99.0 to 99.99 wt.-% of a high density polyethylene, based on the total weight of the polyethylene composition (PE-B); and

   from 50 to 1000 ppm, preferably from 75 to 700 ppm, more preferably from 100 to 500 ppm synthetic hydrotalcite, based on the total weight of the polyethylene composition (PE-B),
   wherein the polyethylene composition (PE-B) has a density of from 955.0 to 968.0 $kg/m^3$, preferably from 956.0 to 965.0 $kg/m^3$, more preferably from 957.0 to 963.0 $kg/m^3$, determined according to ISO 1183-1:2004 Method A;

   • layer (A) is the outer layer of the multilayer film that is surface-treated on its outer surface and comprises from 60 to 100 wt.-%, preferably from 70 to 100 wt.- %, more preferably 80 to 100 wt.-%, based on the total weight of layer (A), of a polyethylene composition (PE-A); and
   • layer (C) is the inner sealing layer of the multilayer film and comprises from 60 to 100 wt.-%, preferably from 70 to 100 wt.-%, more preferably 80 to 100 wt.-%, based on the total weight of layer (C), of a polyethylene composition (PE-C);

   wherein
   surface-treated layer (A) shows a surface treatment retainment (STR at time t) after t =28 days of at least 92.0%, with STR at time t being calculated according to the following formula:

   $$STR\ at\ time\ t = 100\% - \frac{(surface\ energy\ at\ time\ 0 - surface\ energy\ at\ time\ t)}{surface\ energy\ at\ time\ 0} \cdot 100\%.$$

2. The multilayer film according to claim 1 wherein surface-treated layer (A) shows a surface treatment retainment (STR at time t) after t = 42 days of at least 88.0% and/or a surface treatment retainment (STR at time t) after t = 56 days of at least 85.0%, with STR at time t being calculated according to the following formula:

   $$STR\ at\ time\ t = 100\% - \frac{(surface\ energy\ at\ time\ 0 - surface\ energy\ at\ time\ t)}{surface\ energy\ at\ time\ 0} \cdot 100\%.$$

3. The multilayer film according to claims 1 or 2 having a ratio of tensile stress in machine direction to tensile stress in transverse direction (tensile stress ratio MD/TD) of from 0.80 to 1.20, preferably from 0.83 to 1.17, more preferably from 0.85 to 1.15, determined according to ISO 527-2.

4. The multilayer film according to any one of the preceding claims, wherein the polyethylene composition (PE-B) has one or more or all of the following properties:

   • a melt flow rate $MFR_2$ in the range of from 0.1 to 1.5 g/10 min, preferably from 0.2 to 1.2 g/10 min, more preferably from 0.5 to 1.0 g/10 min, determined according to ISO 1133 at 2.16 kg and 190°C;
   • a melt flow rate $MFR_5$ in the range of from 0.5 to 5.0 g/10 min, preferably from 1.0 to 4.0 g/10 min, more preferably from 1.5 to 3.5 g/10 min, determined according to ISO 1133 at 5 kg and 190°C;
   • a melt flow rate $MFR_{21}$ in the range of from 20 to 100 g/10 min, preferably from 25 to 90 g/10 min, more preferably from 30 to 70 g/10 min, determined according to ISO 1133 at 21.6 kg and 190°C;
   • a flow rate ratio $FRR_{21/2}$, being the ratio $MFR_{21}/MFR_2$, in the range of from 30 to 80, preferably from 40 to 75, more preferably from 45 to 70;
   • a flow rate ratio $FRR_{21/5}$, being the ratio $MFR_{21}/MFR_5$, in the range of from 5 to 35, preferably from 10 to 30, more preferably from 12 to 25;
   • a flow rate ratio $FRR_{5/2}$, being the ratio $MFR_5/MFR_2$, in the range of from 1.5 to 5.0, preferably from 2.0 to 4.5, more preferably from 2.5 to 4.0;
   • a crystallization temperature Tc in the range of from 113 to 125°C, preferably from 114 to 123°C, more preferably from 115 to 122°C, determined by DSC;

• a melting temperature Tm of from 125 to 140°C, preferably from 127 to 138°C, more preferably from 128 to 136°C, determined according to DSC;

• a zero shear viscosity eta$_0$ of from 15000 to 50000 Pa.s, preferably from 17000 to 45000 Pa s, more preferably from 20000 to 40000 Pa s, determined according to ISO standards 6721-10;

• a weight average molecular weight Mw in the range of from 100000 to 175000 g/mol, preferably from 120000 to 165000 g/mol, more preferably from 135000 to 160000 g/mol, determined by GPC;

• a number average molecular weight Mn in the range of from 5000 to 15000 g/mol, preferably from 7500 to 12500 g/mol, more preferably from 8500 to 11000 g/mol, determined by GPC;

• a z average molecular weight Mz in the range of from 500000 to 1200000 g/mol, preferably from 550000 to 1000000 g/mol, more preferably from 600000 to 900000 g/mol, determined by GPC;

• a Mw/Mn ratio of from 10 to 20, preferably from 11 to 19, more preferably from 12 to 18;

• a xylene cold solubles (XCS) fraction of from 0.5 to 5.0 wt.-%, preferably from 0.7 to 4.0 wt.-%, more preferably from 1.0 to 3.5 wt.-%, determined according to ISO 16152:2005 at 25°C.

5. The multilayer film according to any one of the preceding claims, wherein the polyethylene composition (PE-A) comprises

from 60 to 97 wt.-%, preferably from 70 to 95 wt.-%, more preferably from 80 to 93 wt.-%, based on the total weight of the polyethylene composition (PE-A), of a linear low density polyethylene being a terpolymer of ethylene with two comonomers selected from alpha-olefins having from 3 to 10 carbon atoms and having

• a density in the range of from 920 to 935 kg/m$^3$, preferably from 922 to 933 kg/m$^3$, more preferably from 924 to 930 kg/m$^3$, determined according to ISO 1183;

• a melt flow rate in the range of from 0.1 to 5.0 g/10 min, preferably from 0.5 to 3.5 g/10 min, more preferably from 0.8 to 2.5 g/10 min, determined according to ISO 1133 at 2.16 kg and 190°C; and

• a melting temperature Tm in the range of from 115 to 130°C, preferably from 117 to 127°C, more preferably from 118 to 125°C, determined by DSC; and from 3 to 40 wt.-%, preferably from 5 to 30 wt.-%, more preferably from 7 to 20 wt.- % , based on the total weight of the polyethylene composition (PE-A), of a low density polyethylene being prepared in a high pressure process and having

• a density in the range of from 915 to 930 kg/m$^3$, preferably from 917 to 927 kg/m$^3$, more preferably from 920 to 925 kg/m$^3$, determined according to ISO 1183; and

• a melt flow rate in the range of from 0.1 to 5.0 g/10 min, preferably from 0.5 to 3.5 g/10 min, more preferably from 1.0 to 2.5 g/10 min, determined according to ISO 1133 at 2.16 kg and 190°C.

6. The multilayer film according to any one of the preceding claims, wherein the polyethylene composition (PE-C) comprises

from 60 to 97 wt.-%, preferably from 70 to 95 wt.-%, more preferably from 80 to 93 wt.-%, based on the total weight of the polyethylene composition (PE-C), of a linear low density polyethylene being a terpolymer of ethylene with two comonomers selected from alpha-olefins having from 3 to 10 carbon atoms and having

• a density in the range of from 910 to 925 kg/m$^3$, preferably from 912 to 923 kg/m$^3$, more preferably from 915 to 920 kg/m$^3$, determined according to ISO 1183;

• a melt flow rate in the range of from 0.1 to 5.0 g/10 min, preferably from 0.5 to 3.5 g/10 min, more preferably from 0.8 to 2.5 g/10 min, determined according to ISO 1133 at 2.16 kg and 190°C; and

• a melting temperature Tm in the range of from 115 to 130°C, preferably from 117 to 127°C, more preferably from 118 to 125°C, determined by DSC; and from 3 to 35 wt.-%, preferably from 5 to 26 wt.-%, more preferably from 7 to 16 wt.- %, based on the total weight of the polyethylene composition (PE-C), of a low density polyethylene being prepared in a high pressure process and having

• a density in the range of from 915 to 930 kg/m$^3$, preferably from 917 to 927 kg/m$^3$, more preferably from 920 to 925 kg/m$^3$, determined according to ISO 1183; and

• a melt flow rate in the range of from 0.1 to 5.0 g/10 min, preferably from 0.5 to 3.5 g/10 min, more preferably from 1.0 to 2.5 g/10 min, determined according to ISO 1133 at 2.16 kg and 190°C; and

from 0.1 to 5.0 wt.-%, preferably from 0.5 to 4.5 wt.-%, more preferably from 1.0 to 4.0 wt.-%, based on the total weight of the polyethylene composition (PE-C), of antiblocking agents.

7. The multilayer film according to any one of the preceding claims being a three-layer film in the configuration (A)-(B)-(C) with one surface of layer (A) being in adherent contact with one surface of core layer (B) and one surface of layer (C) being in adherent contact with the other surface of core layer (B) or a multilayer layer film with at least five layers in the configuration (A)-(X)-(B)-(Y)-(C), with one or more layer(s) (X) being sandwiched between layers (A) and (B) and one or more layer(s) (Y) being sandwiched between layers (C) and (B).

8. The multilayer film according to any one of the preceding claims having a total thickness of from 15 to 75 $\mu$m, preferably from 20 to 65 $\mu$m, more preferably from 25 to 55 $\mu$m.

9. A metallized multilayer film, wherein the multilayer film according to any one of the preceding claims has been metallized on the outer surface of layer (A) after the outer surface of layer (A) has been surface treated, wherein the metallized multilayer film has an oxygen transmission rate (OTR) of not more than 125 cc/m$^2\cdot$d, preferably not more than 100 cc/m$^2\cdot$d, when determined under constant conditions of 23°C and 0% RH, and a water vapour transmission rate of not more than 0.60 g/m$^2\cdot$d, preferably not more than 0.55 g/m$^2\cdot$d, more preferably not more than 0.50 g/m$^2\cdot$d, when determined under constant conditions of 38°C and 90% RH.

10. The metallized multilayer film according to claim 9 having one or more or all of the following properties:

> • an average surface roughness (Sa) after metallization in the range of from 20 to 100 nm, preferably from 22 to 90 nm, more preferably from 25 to 85 nm, determined using a Bruker Contour GT-K Optical Profiler; and/or
> • a coefficient of friction (CoF) in the range of from 0.20 to 0.60, preferably from 0.22 to 0.58, more preferably from 0.25 to 0.55, determined according to ASTM D1894; and/or
> • an optical density of from 2.00 to 2.75, preferably from 2.05 to 2.60.

11. A process for producing the multilayer film according to any one of the preceding claims comprising the steps of:

> • Providing the polyethylene compositions (PE-A), (PE-B) and (PE-C);
> • Extruding, preferably coextruding the polyethylene compositions (PE-A), (PE-B) and (PE-C) to produce layers (A), (B) and (C) of the multilayer film;
>
> Surface treating the outer surface of layer (A). ,

12. The process according to claim 11 further comprising the step

> • Metallizing the surface treated outer surface of layer (A) to obtain a metallized multilayer film.

13. The process according to claims 11 or 12, wherein the polyethylene composition (PE-B) is extruded at a melt temperature in the range of from 200 to 225 °C, preferably from 205 to 220 °C.

14. The use of a polyethylene composition (PE-B) comprising

> • from 95.00 to 99.995 wt.-%, preferably from 97.50 to 99.99 wt.-%, more preferably from 99.0 to 99.99 wt.-% of a high density polyethylene, based on the total weight of the polyethylene composition (PE-B); and
> • from 50 to 1000 ppm, preferably from 75 to 700 ppm, more preferably from 100 to 500 ppm synthetic hydrotalcite, based on the total weight of the polyethylene composition (PE-B)
> in a core layer (B) in an amount of from 90 to 100 wt.-%, preferably from 95 to 100 wt.-%, more preferably 100 wt.-%, based on the total weight of layer (B) for producing a multilayer film having an outer layer (A) that is surface-treated, the core layer (B) and an outer sealing layer (C),
> wherein
> the surface-treated layer (A) shows a surface treatment retainment (STR at time t) after t =28 days of at least 92.0%, with STR at time t being calculated according to the following formula:

$$STR\ at\ time\ t = 100\% - \frac{(surface\ energy\ at\ time\ 0 - surface\ energy\ at\ time\ t)}{surface\ energy\ at\ time\ 0} \cdot 100\%.$$

15. The use according to claim 14, wherein the outer layer (A) is metallized after the outer layer (A) has been surface-treated and the metallized multilayer film has an oxygen transmission rate (OTR) of not more than 125 cc/m$^2\cdot$d, preferably not more than 100 cc/m$^2\cdot$d, when determined under constant conditions of 23°C and 0% RH, and a water vapour transmission rate of not more than 0.60 g/m$^2\cdot$d, preferably not more than 0.55 g/m$^2\cdot$d, more preferably not more than 0.50 g/m$^2$·d, when determined under constant conditions of 23°C and 90% RH.

Figure 1

Europäisches
Patentamt

European
Patent Office

Office européen
des brevets

# EUROPEAN SEARCH REPORT

Application Number

EP 23 20 4439

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/105714 A1 (DU ZHE [CN] ET AL) 7 April 2022 (2022-04-07) * abstract; claims 1-20 * * examples 1-5; table 2 * * paragraph [0004] * * paragraphs [0011], [0017] * * paragraphs [0046] – [0050] * * paragraph [0053] * ----- | 1-15 | INV. B32B27/08 B32B27/16 B32B27/18 B32B27/32 C08J5/18 C08L23/06 |
| A | US 10 150 275 B2 (DOW GLOBAL TECHNOLOGIES LLC [US] ET AL.) 11 December 2018 (2018-12-11) * abstract; claims 1-9 * ----- | 1-15 | |

TECHNICAL FIELDS
SEARCHED        (IPC)

B32B
C08J
C08L

The present search report has been drawn up for all claims

| Place of search | Date of completion of the search | Examiner |
|---|---|---|
| The Hague | 4 March 2024 | Bergmans, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**    EP 23 20 4439

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2024

| Patent document cited in search report | Publication date | Patent family member(s) | Publication date |
|---|---|---|---|
| US 2022105714 A1 | 07-04-2022 | AR 117791 A1 | 25-08-2021 |
| | | CN 113260508 A | 13-08-2021 |
| | | EP 3924182 A1 | 22-12-2021 |
| | | JP 2022518742 A | 16-03-2022 |
| | | US 2022105714 A1 | 07-04-2022 |
| | | WO 2020155795 A1 | 06-08-2020 |
| US 10150275 B2 | 11-12-2018 | AR 096743 A1 | 03-02-2016 |
| | | BR 112015031533 A2 | 25-07-2017 |
| | | CN 105555527 A | 04-05-2016 |
| | | EP 3013579 A1 | 04-05-2016 |
| | | ES 2793528 T3 | 16-11-2020 |
| | | JP 6180631 B2 | 16-08-2017 |
| | | JP 2016523193 A | 08-08-2016 |
| | | MX 365588 B | 07-06-2019 |
| | | US 2016144603 A1 | 26-05-2016 |
| | | WO 2014209411 A1 | 31-12-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 688794 A
- WO 0155230 A
- EP 2799456 A
- WO 9212182 A
- WO 9618662 A
- US 4582816 A
- US 3405109 A
- US 3324093 A
- EP 479186 A
- US 5391654 A
- EP 1310295 A
- EP 1591460 A
- WO 2007025640 A
- US 4543399 A
- EP 699213 A
- WO 9425495 A
- EP 696293 A
- EP 1415999 A
- WO 0026258 A
- EP 887379 A
- EP 887380 A
- EP 887381 A
- EP 991684 A
- WO 0029452 A
- US 4621952 A
- EP 188125 A
- EP 250169 A
- EP 579426 A
- WO 9512622 A
- WO 9632423 A
- WO 9728170 A
- WO 9832776 A
- WO 9961489 A
- WO 03010208 A
- WO 03051934 A
- WO 03051514 A
- WO 2004085499 A
- EP 1752462 A
- EP 1739103 A
- EP 1378528 A1

**Non-patent literature cited in the description**

- **L. MANDELKERN** ; **R. G. ALAMO**. In Physical properties of polymers handbook. Springer, 2007
- Rheological characterization of polyethylene fractions. **HEINO, E.L.** ; **LEHTINEN, A.** ; **TANNER J.** ; **SEPPÄLÄ, J.** Theor. Appl. Rheol., Proc. Int. Congr. Rheol. Neste Oy, 1992, vol. 1, 360-362
- The influence of molecular structure on some rheological properties of polyethylene. **HEINO, E.L.** Annual Transactions of the Nordic Rheology Society. Borealis Polymers Oy, 1995
- Definition of terms relating to the non-ultimate mechanical properties of polymers. *Pure & Appl. Chem.*, 1998, vol. 70 (3), 701-754
- *CHEMICAL ABSTRACTS*, 6683-19-8
- *CHEMICAL ABSTRACTS*, 31570-04-4
- *CHEMICAL ABSTRACTS*, 1592-23-0